(19) Europäisches Patentamt
European Patent Office
Office européen des brevets

(11) **EP 4 535 287 A1**

(12) **EUROPEAN PATENT APPLICATION**
published in accordance with Art. 153(4) EPC

(43) Date of publication:
**09.04.2025   Bulletin 2025/15**

(21) Application number: **23815056.9**

(22) Date of filing: **24.05.2023**

(51) International Patent Classification (IPC):
***G06T 9/00*** *(2006.01)*

(52) Cooperative Patent Classification (CPC):
**G06T 9/00**

(86) International application number:
**PCT/CN2023/096097**

(87) International publication number:
**WO 2023/231872 (07.12.2023 Gazette 2023/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.05.2022   CN 202210613984**

(71) Applicant: **Vivo Mobile Communication Co., Ltd.
Dongguan, Guangdong 523863 (CN)**

(72) Inventors:
• ZOU, Wenjie
  Dongguan, Guangdong 523863 (CN)
• ZHANG, Wei
  Dongguan, Guangdong 523863 (CN)
• YANG, Fuzheng
  Dongguan, Guangdong 523863 (CN)
• LV, Zhuoyi
  Dongguan, Guangdong 523863 (CN)

(74) Representative: **Conti, Marco
Bugnion S.p.A.
Via di Corticella, 87
40128 Bologna (IT)**

(54) **CODING METHOD AND APPARATUS, DECODING METHOD AND APPARATUS, AND DEVICE**

(57)      This application pertains to the field of encoding and decoding technologies, and discloses an encoding method and apparatus, a decoding method and apparatus, and a device. The encoding method in embodiments of this application includes: encoding, by an encoder based on first identification information, a basemesh corresponding to a target three-dimensional mesh to obtain a first bitstream, where the basemesh includes reconstructed texture coordinate information corresponding to the target three-dimensional mesh, and the first identification information is used to represent whether to encode the reconstructed texture coordinate information; obtaining, by the encoder, a second bitstream based on mesh difference information, where the mesh difference information is used to represent difference information between the basemesh and a to-be-encoded three-dimensional mesh, and the target three-dimensional mesh is obtained based on the to-be-encoded three-dimensional mesh; obtaining, by the encoder, a third bitstream based on reconstructed texture map information, where the reconstructed texture map information is obtained based on the first bitstream and the second bitstream; and generating, by the encoder, a target bitstream based on the first bitstream, the second bitstream, and the third bitstream.

An encoder encodes, based on first identification information, a base mesh corresponding to a target three-dimensional mesh to obtain a first bitstream, where the base mesh includes reconstructed texture coordinate information corresponding to the target three-dimensional mesh, and the first identification information is used to represent whether to encode the reconstructed texture coordinate information — 101

The encoder obtains a second bitstream based on mesh difference information, where the mesh difference information is used to represent difference information between the base mesh and a to-be-encoded three-dimensional mesh, and the target three-dimensional mesh is obtained based on the to-be-encoded three-dimensional mesh — 102

The encoder obtains a third bitstream based on reconstructed texture map information, where the reconstructed texture map information is obtained based on the first bitstream and the second bitstream — 103

The encoder generates a target bitstream based on the first bitstream, the second bitstream, and the third bitstream — 104

FIG. 1

**Description**

**CROSS-REFERENCE TO RELATED APPLICATIONS**

This application claims priority to Chinese Patent Application No. 202210613984.5, filed in China on May 31, 2022, which is incorporated herein by reference in its entirety.

TECHNICAL FIELD

This application pertains to the field of encoding and decoding technologies, and specifically relates to an encoding method and apparatus, a decoding method and apparatus, and a device.

**BACKGROUND**

A three-dimensional mesh (Mesh) may be considered as a most popular representation method for a three-dimensional model in the past years. This method plays an important role in many application programs. Thanks to its simple representation, this method is widely integrated into graphics processing units of computers, tablet computers, and smartphones by hardware algorithms, and is specially used to render three-dimensional meshes.

Texture coordinates, also known as UV coordinates, are a type of information that describes textures of vertices of a three-dimensional mesh. An amount of UV coordinate data accounts for a large proportion in the three-dimensional mesh, and encoding of UV coordinates in the solution of the related art consumes a large quantity of bits, resulting in low encoding efficiency of the three-dimensional mesh.

**SUMMARY**

Embodiments of this application provide an encoding method and apparatus, a decoding method and apparatus, and a device to resolve a problem that encoding efficiency of a three-dimensional mesh in the solution of the related art is low.

According to a first aspect, an encoding method is provided and includes:

encoding, by an encoder based on first identification information, a basemesh corresponding to a target three-dimensional mesh to obtain a first bitstream, where the basemesh includes reconstructed texture coordinate information corresponding to the target three-dimensional mesh, and the first identification information is used to represent whether to encode the reconstructed texture coordinate information;

obtaining, by the encoder, a second bitstream based on mesh difference information, where the mesh difference information is used to represent difference information between the basemesh and a to-be-encoded three-dimensional mesh, and the target three-dimensional mesh is obtained based on the to-be-encoded three-dimensional mesh;

obtaining, by the encoder, a third bitstream based on reconstructed texture map information, where the reconstructed texture map information is obtained based on the first bitstream and the second bitstream; and

generating, by the encoder, a target bitstream based on the first bitstream, the second bitstream, and the third bitstream.

According to a second aspect, a decoding method is provided and includes:

demultiplexing, by a decoder, an obtained target bitstream to obtain a first bitstream, a second bitstream, and a third bitstream, where the first bitstream is obtained based on a basemesh corresponding to a target three-dimensional mesh, the second bitstream is obtained based on mesh difference information, the mesh difference information is used to represent difference information between the basemesh and a to-be-encoded three-dimensional mesh, the target three-dimensional mesh is obtained based on the to-be-encoded three-dimensional mesh, and the third bitstream is obtained based on reconstructed texture map information; and

in a case that the decoder determines that the first bitstream includes reconstructed texture coordinate information, reconstructing a target three-dimensional mesh based on a first decoding result corresponding to the first bitstream, a second decoding result corresponding to the second bitstream, and a third decoding result corresponding to the third bitstream; and/or

in a case that the decoder determines that the first bitstream does not include reconstructed texture coordinate information, generating reconstructed texture coordinate information, and reconstructing a target three-dimensional mesh based on the generated reconstructed texture coordinate information, a first decoding result corresponding to the first bitstream, a second decoding result corresponding to the second bitstream, and a third decoding result corresponding to the third bitstream.

According to a third aspect, an encoding apparatus is provided and applied to an encoder and includes:

a first encoding module, configured to encode, based on first identification information, a basemesh corresponding to a target three-dimensional mesh to obtain a first bitstream, where the basemesh includes reconstructed texture coordinate information corresponding to the target three-dimensional mesh, and the first identification information is used to represent whether to encode the reconstructed texture coordinate information;

a first obtaining module, configured to obtain a second bitstream based on mesh difference information, where the mesh difference information is used to represent difference information between the basemesh and a to-be-encoded three-dimensional mesh, and the target three-dimensional mesh is obtained based on the to-be-encoded three-dimensional mesh;

a second obtaining module, configured to obtain a third bitstream based on reconstructed texture map information, where the reconstructed texture map information is obtained based on the first bitstream and the second bitstream; and

a first generation module, configured to generate a target bitstream based on the first bitstream, the second bitstream, and the third bitstream.

According to a fourth aspect, a decoding apparatus is provided and applied to a decoder and includes:

a sixth obtaining module, configured to demultiplex an obtained target bitstream to obtain a first bitstream, a second bitstream, and a third bitstream, where the first bitstream is obtained based on a basemesh corresponding to a target three-dimensional mesh, the second bitstream is obtained based on mesh difference information, the mesh difference information is used to represent difference information between the basemesh and a to-be-encoded three-dimensional mesh, the target three-dimensional mesh is obtained based on the to-be-encoded three-dimensional mesh, and the third bitstream is obtained based on reconstructed texture map information; and

a reconstruction module, configured to: in a case that the decoder determines that the first bitstream includes reconstructed texture coordinate information, reconstruct a target three-dimensional mesh based on a first decoding result corresponding to the first bitstream, a second decoding result corresponding to the second bitstream, and a third decoding result corresponding to the third bitstream; and/or in a case that the decoder determines that the first bitstream does not include reconstructed texture coordinate information, generate reconstructed texture coordinate information, and reconstruct a target three-dimensional mesh based on the generated reconstructed texture coordinate information, a first decoding result corresponding to the first bitstream, a second decoding result corresponding to the second bitstream, and a third decoding result corresponding to the third bitstream.

According to a fifth aspect, an encoding device is provided. The encoding device includes a processor and a memory. The memory stores a program or instructions capable of running on the processor. When the program or instructions are executed by the processor, the steps of the method according to the first aspect are implemented.

According to a sixth aspect, an encoding device is provided and includes a processor and a communication interface. The processor is configured to: encode, based on first identification information, a basemesh corresponding to a target three-dimensional mesh to obtain a first bitstream, where the basemesh includes reconstructed texture coordinate information corresponding to the target three-dimensional mesh, and the first identification information is used to represent whether to encode the reconstructed texture coordinate information; obtain a second bitstream based on mesh difference information, where the mesh difference information is used to represent difference information between the basemesh and a to-be-encoded three-dimensional mesh, and the target three-dimensional mesh is obtained based on the to-be-encoded three-dimensional mesh; obtain a third bitstream based on reconstructed texture map information, where the reconstructed texture map information is obtained based on the first bitstream and the second bitstream; and generate a target bitstream based on the first bitstream, the second bitstream, and the third bitstream.

According to a seventh aspect, a decoding device is provided. The decoding device includes a processor and a memory. The memory stores a program or instructions capable of running on the processor. When the program or instructions are executed by the processor, the steps of the method according to the second aspect are implemented.

According to an eighth aspect, a decoding device is provided and includes a processor and a communication interface. The processor is configured to: demultiplex an obtained target bitstream to obtain a first bitstream, a second bitstream, and a third bitstream, where the first bitstream is obtained based on a basemesh corresponding to a target three-dimensional mesh, the second bitstream is obtained based on mesh difference information, the mesh difference information is used to represent difference information between the basemesh and a to-be-encoded three-dimensional mesh, the target three-dimensional mesh is obtained based on the to-be-encoded three-dimensional mesh, and the third bitstream is obtained based on reconstructed texture map information; and

in a case that it is determined that the first bitstream includes reconstructed texture coordinate information, reconstruct a target three-dimensional mesh based on a first decoding result corresponding to the first bitstream, a second decoding result corresponding to the second bitstream, and a third decoding result corresponding to the third bitstream; or

in a case that it is determined that the first bitstream does not include reconstructed texture coordinate information, generate reconstructed texture coordinate information, and reconstruct a target three-dimensional mesh based on the generated reconstructed texture coordinate information, a first decoding result corresponding to the first bitstream, a second decoding result corresponding to the second bitstream, and a third decoding result corresponding to the third bitstream.

According to a ninth aspect, an encoding and decoding system is provided and includes an encoding device and a decoding device. The encoding device may be configured to perform the steps of the encoding method according to the first aspect. The decoding device may be configured to perform the steps of the decoding method according to the second aspect.

According to a tenth aspect, a readable storage medium is provided. The readable storage medium stores a program or instructions. When the program or instructions are executed by a processor, the steps of the method according to the first aspect are implemented, or the steps of the method according to the second aspect are implemented.

According to an eleventh aspect, a chip is provided. The chip includes a processor and a communication interface. The communication interface is coupled to the processor. The processor is configured to run a program or instructions to implement the method according to the first aspect or implement the method according to the second aspect.

According to a twelfth aspect, a computer program or program product is provided. The computer program or program product is stored in a storage medium. The computer program or program product is executed by at least one processor to implement the steps of the method according to the first aspect or implement the steps of the method according to the second aspect.

In the embodiments of this application, the encoder encodes, based on the first identification information, the basemesh corresponding to the target three-dimensional mesh to obtain the first bitstream, where the basemesh includes the reconstructed texture coordinate information corresponding to the target three-dimensional mesh; the encoder obtains the second bitstream based on the mesh difference information; the encoder obtains the third bitstream based on the reconstructed texture map information; and the encoder generates the target bitstream based on the first bitstream, the second bitstream, and the third bitstream. Because an amount of reconstructed texture coordinate data accounts for a large proportion in the three-dimensional mesh, in the embodiments of this application, a choice not to encode the reconstructed texture coordinate information in the basemesh may be made based on the first identification information. Therefore, a bit rate can be greatly saved, and encoding efficiency can be improved.

**BRIEF DESCRIPTION OF DRAWINGS**

FIG. 1 is a schematic flowchart of an encoding method according to an embodiment of this application;
FIG. 2 is a diagram of a three-dimensional mesh encoding framework according to an embodiment of this application;
FIG. 3 is a schematic diagram of a preprocessing module according to an embodiment of this application;
FIG. 4 is a schematic diagram of a process of merging vertices in a mesh simplification process according to an embodiment of this application;
FIG. 5 is a schematic diagram of a midpoint subdivision method according to an embodiment of this application;
FIG. 6 is a schematic diagram of a displacement calculation method according to an embodiment of this application;
FIG. 7 is a schematic diagram of five operation modes defined in an EB;
FIG. 8 is a schematic diagram of prediction of a parallelogram with geometry coordinates;
FIG. 9 is a schematic flowchart of a decoding method according to an embodiment of this application;
FIG. 10 is a schematic diagram of a three-dimensional mesh decoding framework according to an embodiment of this application;
FIG. 11 is a schematic modular diagram of an encoding apparatus according to an embodiment of this application;
FIG. 12 is a schematic structural diagram of an encoding device according to an embodiment of this application;
FIG. 13 is a schematic modular diagram of a decoding apparatus according to an embodiment of this application;
FIG. 14 is a schematic structural diagram of a decoding device according to an embodiment of this application; and
FIG. 15 is a schematic structural diagram of a communication device according to an embodiment of this application.

DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

An encoding method and a decoding method provided in the embodiments of this application are hereinafter described in detail by using some embodiments and application scenarios thereof with reference to the accompanying drawings.

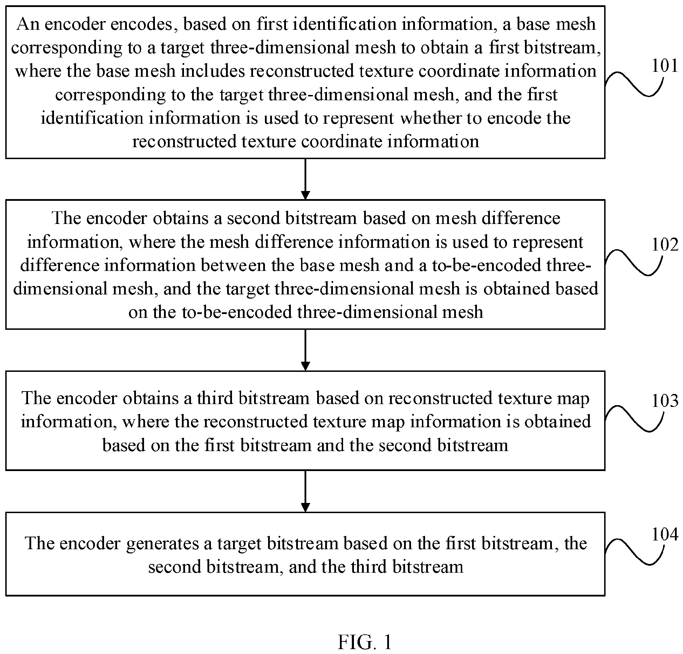

As shown in FIG. 1, an embodiment of this application provides an encoding method, including the following steps.

Step 101: An encoder encodes, based on first identification information, a basemesh corresponding to a target three-dimensional mesh to obtain a first bitstream, where the basemesh includes reconstructed texture coordinate information corresponding to the target three-dimensional mesh, and the first identification information is used to represent whether to encode the reconstructed texture coordinate information.

In this embodiment of this application, the first identification information is used to determine whether to encode the reconstructed texture coordinate information corresponding to the target three-dimensional mesh. For example, when the first identification information is 1, it indicates that the reconstructed texture coordinate information needs to be encoded, or when the first identification information is 0, it indicates that the reconstructed texture coordinate information does not need to be encoded.

The reconstructed texture coordinate information includes reconstructed texture coordinates corresponding to each vertex, that is, UV coordinates, where the UV coordinates are used to represent a texture color value of the corresponding vertex.

It should be noted that the target three-dimensional mesh mentioned in this application may be understood as a three-dimensional mesh corresponding to any video frame.

Optionally, the basemesh further includes geometry information and connectivity information corresponding to the target three-dimensional mesh.

Optionally, in this embodiment of this application, any mesh encoding method may be used to encode the geometry information, connectivity information, and reconstructed texture coordinate information in the basemesh (if it is determined, based on the first identification information, that encoding is required), and a basemesh bitstream, that is, the first bitstream, is obtained after multiplexing.

Step 102: The encoder obtains a second bitstream based on mesh difference information, where the mesh difference information is used to represent difference information between the basemesh and a to-be-encoded three-dimensional mesh, and the target three-dimensional mesh is obtained based on the to-be-encoded three-dimensional mesh.

Optionally, the mesh difference information is used to represent difference information between a refined basemesh and the to-be-encoded three-dimensional mesh.

Optionally, refinement (refinement) interpolation processing is performed on the geometry information and UV coordinates of the basemesh, then a displacement vector between an interpolation point and a nearest neighboring vertex of an original mesh (the to-be-encoded three-dimensional mesh) is calculated, and the mesh difference information is obtained by using this displacement vector.

Step 103: The encoder obtains a third bitstream based on reconstructed texture map information, where the reconstructed texture map information is obtained based on the first bitstream and the second bitstream.

Herein, the third bitstream is obtained by encoding the reconstructed texture map information. Optionally, the reconstructed texture map information is encoded by using a video encoder.

Step 104: The encoder generates a target bitstream based on the first bitstream and the second bitstream.

In this step, after the first bitstream, the second bitstream, and the third bitstream are obtained, the target bitstream is generated by multiplexing the first bitstream, the second bitstream, and the third bitstream.

It should be noted that the encoding method in this embodiment of this application is applicable to encoding in lossy mode.

In this embodiment of this application, the encoder encodes, based on the first identification information, the basemesh corresponding to the target three-dimensional mesh to obtain the first bitstream, where the basemesh includes the reconstructed texture coordinate information corresponding to the target three-dimensional mesh; the encoder obtains the second bitstream based on the mesh difference information; the encoder obtains the third bitstream based on the reconstructed texture map information; and the encoder generates the target bitstream based on the first bitstream, the second bitstream, and the third bitstream. Because an amount of reconstructed texture coordinate data accounts for a large proportion in the three-dimensional mesh, in this embodiment of this application, a choice not to encode the reconstructed texture coordinate information in the basemesh may be made based on the first identification information. Therefore, a bit rate can be greatly saved, and encoding efficiency can be improved.

Optionally, before the encoder encodes, based on the first identification information, the basemesh corresponding to the target three-dimensional mesh to obtain the first bitstream, the method further includes:

in lossy encoding mode, simplifying the to-be-encoded three-dimensional mesh to obtain the target three-dimensional mesh; or
in lossless encoding mode, determining that the to-be-encoded three-dimensional mesh is the target three-dimensional mesh.

In this embodiment of this application, in lossy encoding mode, the to-be-encoded three-dimensional mesh is preprocessed, where the preprocessing may be simplification processing. For example, a simplification operation may be performed on geometry and a connectivity to reduce quantities of vertices and edges of the mesh while maintaining a mesh structure as much as possible, and further reduce an amount of data of the three-dimensional mesh.

Optionally, that the encoder generates a target bitstream based on the first bitstream and the second bitstream includes:

encoding the first identification information to obtain encoded first identification information; and
generating the target bitstream based on the encoded first identification information, the first bitstream, and the second bitstream.

In this embodiment of this application, the first identification information may be carried in the target bitstream, so that a decoder can determine, based on the first identification information, whether the reconstructed texture coordinate information needs to be generated.

Optionally, that an encoder encodes, based on first identification information, a basemesh corresponding to a target three-dimensional mesh to obtain a first bitstream includes:

in a case that the first identification information represents encoding of the reconstructed texture coordinate information corresponding to the target three-dimensional mesh, encoding the geometry information, the connectivity information, and the reconstructed texture coordinate information to obtain the first bitstream; and/or
in a case that the first identification information represents non encoding of the reconstructed texture coordinate information corresponding to the target three-dimensional mesh, encoding the geometry information and the connectivity information to obtain the first bitstream.

In this embodiment of this application, a user may set the first identification information based on an actual requirement, that is, the user may choose whether to encode the reconstructed texture coordinate information.

Optionally, before the encoder obtains the third bitstream based on the reconstructed texture map information, the method further includes:

decoding and dequantizing the first bitstream to obtain a reconstructed basemesh;

decoding and dequantizing the second bitstream to obtain target mesh difference information; and
generating the reconstructed texture map information based on the reconstructed basemesh and the target mesh difference information and according to a texture map generation algorithm.

Optionally, in this embodiment of this application, the reconstructed texture coordinate information is generated based on the geometry information and the connectivity information of the basemesh corresponding to the target three-dimensional mesh and according to a texture coordinate resampling algorithm.

A manner of generating the reconstructed texture coordinate information is the same as a generation manner in the related art. Details are not described herein.

Optionally, that the encoder obtains a second bitstream based on mesh difference information includes:

decoding the first bitstream to obtain a reconstructed mesh corresponding to the first bitstream;
updating the mesh difference information based on the reconstructed mesh to obtain updated mesh difference information; and
encoding the updated mesh difference information to obtain the second bitstream.

In this embodiment of this application, because the encoder performs lossy compression on the basemesh, to improve accuracy of the mesh difference information, it is necessary to update the mesh difference information based on the reconstructed mesh obtained after the basemesh bitstream is decoded, so that the mesh difference information can more accurately indicate a difference between the basemesh and the original mesh (to-be-encoded mesh).

In addition, after the mesh difference information is updated, a transform such as a wavelet transform is performed on the mesh difference information. Then transformed displacement information is quantized and the transformed mesh difference information is arranged in pixel values of an image according to a rule, such as a Z-scan order. Video encoding is performed on the image.

Optionally, that the encoder generates a target bitstream based on the first bitstream, the second bitstream, and the third bitstream includes:

obtaining a fourth bitstream based on patch information of the target three-dimensional mesh; and
obtaining the target bitstream based on the first bitstream, the second bitstream, the third bitstream, and the fourth bitstream.

In this embodiment of this application, for the encoder, a mesh obtained through preprocessing (referred to as the basemesh), the displacement information used to indicate the difference between the basemesh and the original mesh, and reconstructed texture map attribute information are encoded separately: (1) In lossy mode, the three-dimensional mesh is preprocessed. For example, a simplification operation may be performed on the geometry and the connectivity to reduce the quantities of vertices and faces of the mesh while maintaining the mesh structure as much as possible, and further reduce the amount of data of the three-dimensional mesh. (2) For a simplified mesh, a UV coordinate resampling algorithm is used to regenerate UV coordinates. In this application, the simplified geometry information and connectivity and the new UV coordinates generated based on the simplified mesh are referred to as the basemesh. (3) Any static mesh encoding method is used to encode the geometry information, connectivity, and newly generated UV coordinates of the basemesh, and the bitstreams are multiplexed to obtain the basemesh bitstream. It should be noted that whether to encode the UV coordinates of the basemesh is determined by an identifier. (4) Refinement (refinement) interpolation is performed on the geometry information and UV coordinates of the basemesh in a preprocessing module, and a displacement vector between an interpolation point and a nearest neighboring vertex of the original mesh is calculated. A refinement interpolation algorithm parameter and the displacement vector are encoded in a displacement information encoding module to obtain a displacement information bitstream. (5) The encoded basemesh is decoded and reconstructed to obtain the reconstructed basemesh. (6) The encoded displacement information is decoded and dequantized to obtain decoded and dequantized displacement information. (7) The mesh is reconstructed by using the reconstructed basemesh and the decoded and dequantized displacement information. (8) The reconstructed mesh is used to generate a new texture map according to the texture map generation algorithm, and the video encoder is used to encode the newly generated texture map. (9) All obtained subtreams are multiplexed into an output bitstream of the encoder.

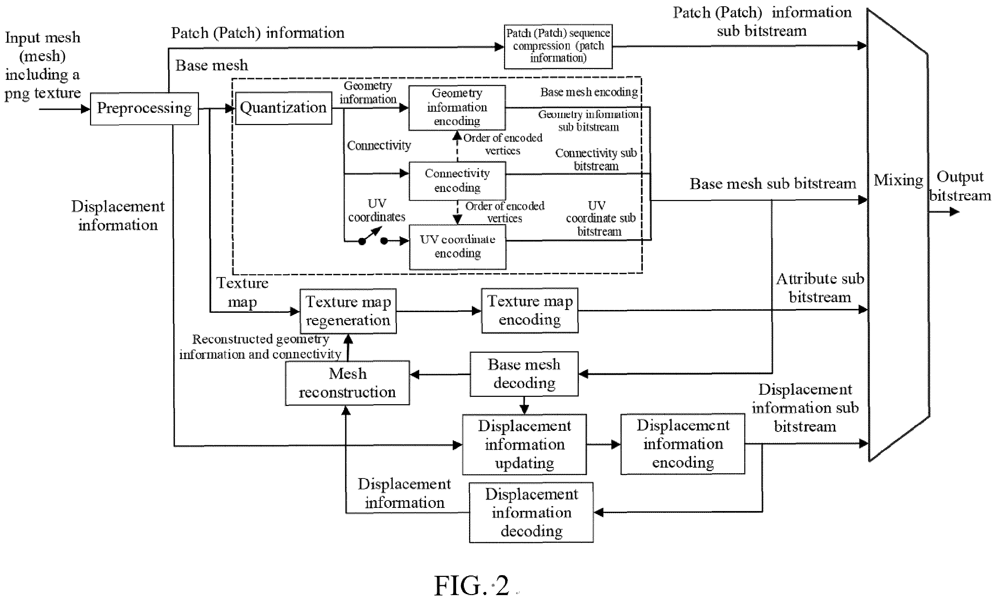

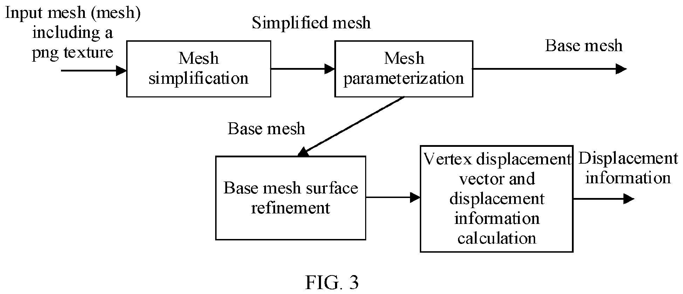

A three-dimensional mesh encoding framework in this embodiment of this application mainly includes a mesh preprocessing module, a basemesh encoding module, a video-based displacement information encoding module, and the like. A diagram of the three-dimensional mesh encoding framework is shown in FIG. 2. First, the input three-dimensional mesh with a texture map (that is, the to-be-encoded three-dimensional mesh) is preprocessed. A preprocessing module is shown in FIG. 3. In the preprocessing module, it is possible to choose whether to partition the three-dimensional mesh. Patch information forms patch (patch) information. Then the three-dimensional mesh is sampled and simplified. Then surface parameterization processing is performed on the simplified mesh, that is, new UV coordinates (reconstructed texture coordinate information) are generated. In this process, some geometry information also changes. After a surface parameterization is performed, the basemesh (including the geometry information, the connectivity, and the UV coordinates) is obtained and output as one substream. In addition, a refinement interpolation operation is performed on the geometry information and UV coordinates of the basemesh, and a displacement vector between an interpolation point and a projection point thereof at a normal vector of an extended face patch on the original mesh is calculated and output as displacement information. Up to now, the preprocessing module has output the basemesh and displacement information. As shown in FIG. 2, subsequently, the preprocessed output basemesh is quantized, and then the geometry information, the connectivity, and the UV coordinates are encoded separately. It should be noted that the encoding of the basemesh herein may be replaced with any three-dimensional mesh encoding method. In this module, the UV coordinates may be selectively encoded. If a choice not to encode the connectivity is made, the decoder needs to use the same UV coordinate generation method as the encoder to reconstruct UV coordinates. Bitstreams of all parts of the basemesh are used together as an output of the basemesh encoding module, that is, a basemesh sub bitstream. Video encoding is performed on the image to obtain a displacement information sub bitstream. In addition, the encoded basemesh is decoded and reconstructed to obtain the reconstructed basemesh. The encoded displacement information is decoded and dequantized to obtain decoded and dequantized displacement information. Then the mesh is reconstructed by using the reconstructed basemesh and the decoded and dequantized displacement information. The reconstructed mesh is used to generate the new texture map according to the texture map generation algorithm, and the video encoder is used to encode the newly generated texture map. Finally, a patch information sub bitstream, the basemesh sub bitstream, and the displacement information sub bitstream are multiplexed to obtain the encoded output bitstream.

A specific implementation of simplification processing is described as follows:

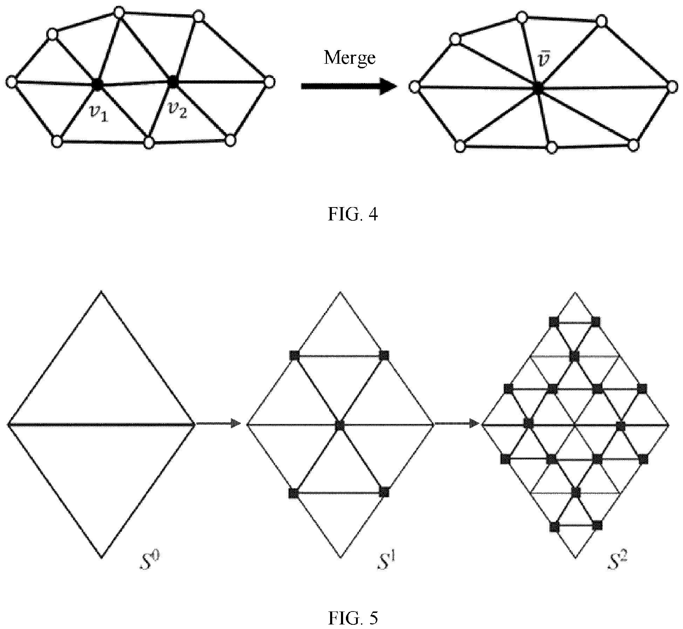

For the input original mesh, that is, the to-be-encoded three-dimensional mesh, a mesh simplification operation is first performed. A focus of mesh simplification is a simplification operation and a corresponding error metric. The mesh simplification operation herein may be edge-based simplification. As shown in FIG. 4, quantities of patches and vertices may be reduced by merging two vertices of an edge. In addition, the mesh may be simplified in a vertex-based mesh simplification manner or the like.

In the process of mesh simplification, it is necessary to define an error metric of simplification. For example, a sum of coefficients of equations of all neighboring faces of a vertex may be selected as an error metric of the vertex, and an error metric of a corresponding edge is a sum of error metrics of two vertices on the edge. After the manner of the simplification operation and the error metric are determined, mesh simplification may be started. For example, the mesh may be divided into one or more local meshes, and a vertex error of an initial mesh in a patch may be calculated first to obtain an error of each edge. Then all edges in the patch are arranged based on errors and according to a rule, such as a rule from small to large. For each simplification, edges may be merged according to a rule, such as selecting an edge with a smallest error for merging. In addition, a position of a merged vertex is calculated, errors of all edges related to the merged vertex are updated, and an edge arrangement order is updated. Faces of the mesh are simplified to an expected quantity through iterations.

A specific process includes:

1. Calculating a vertex error

The vertex error may be defined as a sum of coefficients of equations of all neighboring faces of a vertex. For example, a plane is defied for each neighboring face, and may be expressed by using formula 1:

$$\text{formula 1: } D^2 = (n^T v + d)^2 = v^T(nn^T)v + 2dn^T v + d^2,$$

where D is a distance from any vertex to the plane, n is a unit normal vector of the plane, v is a position vector of the vertex, and d is a constant. In a form of a quadric face, the plane is expressed by using formula 2 : $Q = (A, b, c) = (nn^T, dn, d^2)$,

where Q is a vertex error, and A, b, and c are coefficients representing corresponding symbols in formula 1.

Formula 3 is further obtained from formula 2: $Q(v) = v^T A v + 2b^T v + c.$

Because the vertex error is the sum of the coefficients of the equations of all the neighboring faces of the vertex, assuming $Q_1(v) + Q_2(v) = (Q_1 + Q_2)(v) = (A_1 + A_2, b_1 + b_2, c_1 + c_2)(v)$, an error generated by the merging may be obtained based on $(v_1, v_2) \rightarrow \bar{v}$, and is $Q(\bar{v}) = Q_1(\bar{v}) + Q_2(\bar{v})$, where Q(v) is the vertex error, v is the corresponding vertex, $Q_1(v)$ is an equation of neighboring plane 1 of v, $Q_2(v)$ is an equation of neighboring plane 2 of v, and $A_1$, $A_2$, $b_1$, $b_2$, $c_1$, and $c_2$ are respectively corresponding coefficients. Certainly, if there are a plurality of neighboring faces, a corresponding plane error equation may be further added to formula 3.

2. Merging vertices

A main step in a process of merging vertices is to determine a position of a merged vertex. According to error formula 3, a vertex position that can minimize an error may be selected. For example, by calculating a partial derivative of formula 3, the following formulas may be obtained: formula 4: $\bar{v} = -A^{-1}b$; and

$$\text{formula 5:}\ Q(\bar{v}) = -b^T A^{-1} b + c.$$

As can be learned from the foregoing formulas, a vertex that minimizes the error can be obtained only in a case that matrix A is reversible. Therefore, the position of the merged vertex can be obtained in many ways herein. If quality of mesh simplification is considered, in a case that matrix A is reversible, the vertex position that minimizes the error is selected; or in a case that matrix A is irreversible, a vertex that minimizes the error is selected from two endpoints included on an edge. If complexity of mesh simplification is considered, a midpoint or one of two endpoints of an edge may be directly selected as the position of the merged vertex. If efficiency of quantization after mesh simplification is considered, the position of the merged vertex also needs to be adjusted. Because high-precision information needs to be encoded separately after quantization, adjusting positions of some merged vertices to integer multiples of corresponding quantization parameters ensures that original positions can be restored without additional information during dequantization, thereby reducing an amount of data consumed by high-precision geometry information.

After how to select the position of the merged vertex is determined, the process of merging vertices may be started. For example, errors of all edges in the initial mesh may be calculated first, and the edges are arranged according to a specification, such as an ascending order of errors. An edge whose error meets a rule, such as an edge with a smallest error, is selected in each iteration. Two endpoints of the edge are removed from mesh vertices and the merged vertex is added to a set of mesh vertices. All or part of neighboring vertices of two vertices before merging are used as neighboring vertices of the merged vertex, and then error metrics of all points connected to the merged vertex are updated, to obtain a newly generated edge error. Then an arrangement order of the edges is updated globally from the patch. The foregoing process is cycled until a number of faces required for lossy encoding is reached.

3. Updating the connectivity

After vertices are merged, because some vertices are deleted from the set of vertices and many new vertices are added to the set of vertices, the connectivity between vertices needs to be updated. For example, two vertices before merging, corresponding to the merged vertex, may be determined in the process of merging vertices. To update the connectivity, it is only necessary to use an index of the merged vertex to replace indexes of both the two vertices before merging that appear on faces, and then delete faces with duplicate indexes.

The foregoing is the main process of mesh simplification. In addition, the three-dimensional mesh may also carry attribute information, and the attribute information may also need to be simplified. For the mesh with attribute information, such as texture coordinates, colors, and normal vectors, vertex coordinates may be extended to a higher dimension to calculate errors of vertices with attribute information. Using texture coordinates as an example, and assuming that the vertex coordinates are $(x, y, z)$ and that the texture coordinates are $(u, v)$, extended vertices are $(x, y, z, u, v)$. Assuming that an extended triangle is $T = (p, q, r)$, to determine an error metric in high-dimensional space, two standard orthogonal vectors are calculated first, that is:

$$\text{formula 6:}\ e_1 = \frac{q-p}{\|q-p\|};$$

and

$$\text{formula 7:}\ e_2 = \frac{r-p-(e_1\cdot(r-p))e_1}{\|r-p-(e_1\cdot(r-p))e_1\|},$$

where $e_1$ and $e_2$ are two vectors on a plane where T is located, $q$ is, $e_2$ is , and "·" herein represents point multiplication of vectors and defines a coordinate axis on this high-dimensional plane, with $p$ as an origin. Considering an arbitrary point $v$, assuming $u = p - v$, formula 8 is obtained: $\|u\|^2 = (u \cdot e_1)^2 + \cdots + (\mu \cdot e_n)^2$; that is, formula 9: $(u \cdot e_3)^2 + \cdots + (u \cdot e_n)_2 = \|\mu\|^2 - (\mu \cdot e_1)^2 - (u \cdot e_2)^2$.

Because $e_1$ and $e_2$ are two vectors on the plane where T is located, terms on the left of formula 9 are squares of distances from vertices to the plane where T is located, that is, formula 10: $D^2 = \|\mu\|^2 - (\mu \cdot e_1)^2 - (u \cdot e_2)^2$.

After the formulas are expanded and combined, equations similar to formula 3 may be obtained, where:

$$\text{formula } 11: \ A = I - e_1 e_1^T - e_2 e_2^T;$$

$$\text{formula } 12: \ b = (p \cdot e_1)e_1 + (p \cdot e_2)e_2 - p;$$

and

$$\text{formula } 13: \ c = p \cdot p - (p \cdot e_1)^2 - (p \cdot e_2)^2.$$

After the foregoing error metrics are obtained, subsequent steps same as previous steps performed on three-dimensional information may be performed. In this way, the mesh with attribute information is simplified.

Usually, an edge part of an image can attract more attention of people, hence affecting quality evaluation of people on the image. The same is true for a three-dimensional mesh, and people tend to notice a boundary part more easily. Therefore, whether to keep a boundary is also a factor that affects quality in mesh simplification. Boundaries of meshes are generally geometric boundaries and texture boundaries. When an edge belongs to only one plane, the edge is a geometric boundary. When a same vertex has two or more texture coordinates, the vertex is a boundary of texture coordinates. During mesh simplification, none of the foregoing boundaries should be merged. Therefore, in each simplification, whether a vertex on the edge is a boundary point may be determined first. If the vertex is a boundary point, the vertex is skipped, and the process directly goes to a next iteration.

The following describes an optional mesh parameterization method in detail.

The mesh parameterization method includes the following steps:

(1) Regenerating UV coordinates

Input: the original three-dimensional mesh to be processed (which may include UV coordinates or may not include UV coordinates).

Output: regenerated UV coordinates.

In this method, an ISO-charts (charts) algorithm may be used to obtain the reconstructed texture coordinate information. The algorithm uses spectral analysis to parameterize the stretch-driven three-dimensional mesh, and the three-dimensional mesh is UV-expanded, partitioned, and packed into a two-dimensional texture domain. A stretch threshold is set. A specific implementation process of this algorithm is as follows:

(a) performing surface spectral analysis to provide an initial parameterization;
(b) performing an iteration of stretch optimization;
(c) if the derived parameterized stretch is less than the threshold, stopping;
(d) performing surface spectral clustering to divide a surface into charts;
(e) using a graph cut (graph cut) algorithm to optimize a chart boundary; and
(f) iteratively dividing the charts until a stretch criterion is met.

The following separately describes the foregoing four main parts: surface spectral analysis, stretch optimization, surface spectral clustering, and boundary optimization.

1. Surface spectral analysis

Surface spectral analysis parameterizes the target three-dimensional mesh based on an isometric feature mapping (isometric feature mapping, IsoMap) dimension reduction method. Given a group of high-dimensional points, IsoMap calculates a geodesic distance (geodesic distance) along a manifold as a jump sequence between neighboring vertices. Then a multidimensional scaling (multidimensional scaling, MDS) algorithm is applied to these geodesic distances to find a group of points embedded in low-dimensional space with similar pairwise distances. Given a surface with N points, a calculation process is as follows:

(a) calculating a symmetric matrix $\mathbf{D}_N$ of squares of geodesic distances between surface points;
(b) dual-centering and normalizing $D_N$ to obtain $B_N$, where a calculation process is as follows:

$$\text{formula 14: } B_N = \frac{1}{2} J_N D_N J_N,$$

where $J_N = I - \frac{1}{N} 11^T$, I is an N-dimensional identity matrix, and 1 is a unit vector with a length of N;

(c) calculating an eigenvalue $\lambda_i$ of $B_N$ and a corresponding eigenvector $\vec{v}_i$, where i=1, 2, ..., N; and

(d) for each point i of the original surface, its embedding in the new space is an N-dimensional vector $\vec{y}_i$, and a calculation process of its $j^{th}$ element is as follows:

$$\text{formula 15: } \vec{y}_i^j = \sqrt{\lambda_j} \ \vec{v}_j^i, j=1, 2, ..., N.$$

The eigenvalue $\lambda_i$ of $B_N$ and the corresponding eigenvector $\vec{v}_i$ constitute spectral decomposition of a surface shape. An eigenvector corresponding to a large eigenvalue represents a global low-frequency feature on the surface, and an eigenvector corresponding to a small eigenvalue represents a high-frequency detail. High-energy and low-frequency components are used as a basis for chartification and the parameterization.

Although N eigenvalues are required to fully represent a surface with N vertices, a small part of the N eigenvalues usually occupy most energy. Therefore, only n<<N largest eigenvalues and corresponding eigenvectors are calculated to generate n-dimensional embeddings of all points.

In addition, because mappings from the high-dimensional space to the low-dimensional space are not isometric, this parameterization may cause distortion. For each vertex i, a definition of geodesic distance distortion (GDD) in an embedding is as follows:

$$\text{formula 16: } GDD(i) = \sqrt{\frac{1}{N-1} \sum_{j=1}^{N} (||\vec{y}_i - \vec{y}_j|| - d_{geo}(i, j))^2},$$

where $\vec{y}_i$ is an n-dimensional embedding coordinate of vertex i, and $d_{geo}(i, j)$ is a geodesic distance between point i and point j.

When n=2, the surface spectral analysis generates a surface parameterization with a smallest sum of GDD squares of all vertices.

It should be noted that although the Isomap algorithm calculates the geodesic distance along the manifold, in this solution, in a case that some non-manifolds exist in the input three-dimensional mesh, corresponding preprocessing is performed to eliminate existence of the non-manifolds.

2. Stretch optimization

Due to non isometricity from three-dimensional space to two-dimensional space, the parameterization causes distortion. To eliminate the distortion, stretch optimization is required. Distortion may be measured in many ways, including preservation of angles or regions, or how much a parameter distance is stretched or shortened on the surface. This algorithm focuses on distance distortion, and especially definitions of geometric stretches, which define two measures: an average stretch $L^2$ and a worst stretch $L^\infty$ of a surface local distance.

Assuming a triangle T with two-dimensional texture coordinates $p_1, p_2, p_3$, where $p_i = (s_i, t_i)$, and corresponding three-dimensional coordinates are expressed as $q_1, q_2, q_3$, a calculation process of an affine mapping S(p)=S(s, t)=q is as follows:

$$\text{formula 17: } S(p) = (\ \langle p, \rangle p|2), p3q1 \ + \ \langle p, \rangle p|3), p1q2 + \langle \rangle p, p1, p2q3)/\langle \rangle p|1), p2, p3,$$

where (a, b, c) indicates an area of a triangle abc. Because the mapping is affine, its partial derivative is a constant at (s, t), and its calculation process is as follows:

$$\text{formula 18: } S_s = \partial S / \partial s = (q_1(t_2 - t_3) + q_2(t_3 - t_1) + q_3(t_1 - t_2))/(2A) \ ; \text{and}$$

formula 19:

$$S_t = \partial S / \partial t = (q_1(s_3 - s_2) + q_2(s_1 - s_3) + q_3(s_2 - s_1))/(2A),$$

where

$$A = \langle p_1, p_2, p_3 \rangle = ((s_2 - s_1)(t_3 - t_1) - (s_3 - s_1)(t_2 - t_1))/2.$$

Then larger and smaller singular values of a Jacobian (Jacobian) matrix []S|S), St are calculated, and a calculation process is as follows:

$$\text{formula 20:} \quad \gamma_{\max} = \sqrt{1/2 \left( (a + c) + \sqrt{(a - c)^2 + 4b^2} \right)};$$

and

$$\text{formula 21:} \quad \gamma_{\min} = \sqrt{1/2 \left( (a + c) - \sqrt{(a - c)^2 + 4b^2} \right)},$$

where $a = S_s \cdot S_s$, $b = S_s \cdot S_t$, $c = S_t \cdot S_t$. Singular values $\gamma_{\max}$ and $\gamma_{\min}$ indicate maximum and minimum lengths obtained when a unit length vector is mapped from the two-dimensional texture domain to a three-dimensional surface, that is, the maximum and minimum local "stretches". Two stretch measures on the triangle T are defined as follows:

$$\text{formula 22:} \quad L^2(T) = \sqrt{(\gamma_{\max}^2 + \gamma_{\min}^2)/2} = \sqrt{(a + c)/2};$$

and

$$\text{formula 23:} \quad L^\infty(T) = \gamma_{\max}.$$

A stretch measure on the entire three-dimensional mesh $M = \{T_i\}$ is defined as follows:

$$\text{formula 24:} \quad L^2(M) = \sqrt{i_{T_i \epsilon M}\left(L^2(T_i)\right)^2 A'(T_i) / i_{T_i \epsilon M} A'(T_i)};$$

and

$$\text{formula 25:} \quad L^\infty(M) = \max_{T_i \epsilon M} L^\infty(T_i),$$

where $A'(T_i)$ is a surface area of a triangle $T_i$ in three-dimensional space.

Because $L^\infty$ depends only on one worst point in the domain, the $L^\infty$ stretch is difficult to control for any method, but a result may be significantly improved after several iterations of $L^2$ stretch minimization.

3. Surface spectral clustering

If the parameterization generated by spectral analysis fails to meet the stretch threshold, the surface is divided into smaller charts. Because global features of a model correspond to larger eigenvalues, the eigenvalues are used for division. Results of spectral analysis are used to calculate several representative vertices and then grow charts (grow charts) around these representatives simultaneously. This method is referred to as surface spectral clustering. A specific algorithm process is as follows:

(a) Sort the eigenvalues from spectral analysis and corresponding eigenvectors in descending order, that is, $\lambda_1 \geq \lambda_2 \geq ... \geq \lambda_N$.

(b) Obtain first n eigenvalues and eigenvectors (n≤10) that maximize $\lambda_n/\lambda_{n+1}$.

(c) For each vertex i in the target three-dimensional mesh, calculate its n-dimensional embedding coordinates

$$\vec{\mathbf{y}}_i^j = \sqrt{\lambda_j}\ \vec{\mathbf{v}}_j^i\ (j=1, 2, ..., n)$$.

(d) For each of the n-dimensional embedding coordinates, find two vertices with maximum and minimum coordinate values, and set them as 2n representatives.

(e) Remove those representatives whose distances are less than a distance threshold to generate m≤2n representatives, where optionally, the distance threshold is 10 times an average edge length of the target three-dimensional mesh.

(f) Use the geodesic distance calculated in the surface spectral analysis, grow charts simultaneously around the representatives, and divide the three-dimensional mesh into m parts. Each triangle is assigned to a chart with a representative nearest to the triangle (a geodesic distance from the triangle to the representative is calculated as an average value of geodesic distances from three vertices of the triangle to a representative vertex).

4. Boundary optimization

After a plurality of charts are obtained, the graph cut algorithm is used to optimize boundaries between the charts. The boundaries of the charts should meet two objectives: (1) Without being jagged much, the boundaries should pass through high curvature regions, and (2) the boundaries should minimize embedding distortion of the charts at the boundaries of the charts. This algorithm expresses an optimal boundary problem as a graph cutting problem. For simplicity, the following discuses a binary case of dividing the surface into two. When the surface is subdivided into more than two charts, each pair of neighboring charts is considered in sequence.

Assuming that an optimal boundary is found between chart A and chart B, the initial division is generated by using surface spectral clustering. Then a middle region C is generated by extending a region to two sides of an initial division boundary. A size of the middle region is proportional to a total area of unstripped patches. Now, an undirected mesh graph is constructed from C by using an extension of a method in the graph cut algorithm. Herein, a definition of "capacity" between two neighboring triangles $f_i$ and $f_j$ in the graph cut algorithm is modified as shown in the following formula 26:

$$\text{formula } 26\text{:}\ c(f_i, f_j) = \alpha c_{\text{ang}}(f_i, f_j) + (1 - \alpha)c_{\text{distort}}(f_i, f_j).$$

A first term in formula 26 corresponds to the first objective of non-jagged cutting along an edge with a high dihedral angle, and a calculation process is shown in formula 27:

$$\text{formula } 27\text{:}\ c_{\text{ang}}(f_i, f_j) = \left(1 + \frac{d_{\text{ang}}(f_i, f_j)}{\text{avg}(d_{\text{ang}})}\right)^{-1},$$

where $d_{\text{ang}}(f_i, f_j) = 1 - \cos \alpha_{ij}$, $\alpha_{ij}$ is an angle between the normal lines of triangles $f_i$ and $f_j$, and $\text{avg}(d_{\text{ang}})$ is an average angular distance between neighboring triangles.

A second term in formula 26 measures embedding distortion, and a calculation process is shown in formulas 28 and 29:

$$\text{formula } 28\text{:}\ c_{\text{distort}}(f_i, f_j) = \frac{d_{\text{distort}}(f_i, f_j)}{\text{avg}(d_{\text{distort}})}\text{; and}$$

$$\text{formula } 29\text{:}\ d_{\text{distort}}(f_i, f_j) = |\text{GDD}_A(f_i) - \text{GDD}_B(f_i)| + |\text{GDD}_A(f_j) - \text{GDD}_B(f_j)|,$$

where $\text{GDD}_A(f_i)$ and $\text{GDD}_B(f_i)$ are respectively GDD of an embedding induced by chart A or chart B in the triangle $f_i$, and $\text{avg}(d_{\text{distort}})$ is an average of $d_{\text{distort}}(f_i, f_j)$ on all neighboring triangle pairs. This definition of $c_{\text{distort}}(f_i, f_j)$ is more inclined to balancing boundary edges of GDD between the embeddings determined by chart A and chart B for neighboring triangles thereof. In other words, cutting should avoid placing the triangle on a wrong side to generate unnecessary deformation.

A weight parameter $\alpha$ in formula 26 is a trade-off between the foregoing two objectives.

A simple implementation of this stretch-driven chartification and parameterization algorithm is very expensive, especially as a quantity of model vertices increases. Therefore, to speed up the calculation, in practical applications, the Iso-charts algorithm uses an extended algorithm of Isomap: landmark Isomap. In addition, the landmark Isomap algorithm is also used to calculate embedding coordinates of vertices in the middle region in boundary optimization to further reduce the embedding distortion.

Finally, the charts generated in the foregoing process are packed into the two-dimensional texture domain by using a chart packing algorithm used in an MCGIM algorithm. Finally, the three-dimensional mesh with regenerated UV coordinates can be obtained.

(2) Mesh refinement

Input: the basemesh (including attribute information).
Output: a refined mesh.
In this embodiment of this application, any mesh refinement solution may be used to refine the basemesh. A feasible refinement solution is a midpoint subdivision solution, in which each triangle is subdivided into four sub-triangles in each subdivision iteration, as shown in FIG. 5. A new vertex is introduced in the middle of each edge. A subdivision process is applied to geometric and texture coordinates independently because connectivity of geometric and texture coordinates is usually different. In the subdivision solution, a position $Pos(v_{12})$ of the newly introduced vertex $v_{12}$ in the middle of the edge $(v_1, v_2)$ is calculated, as shown below:

$$\text{formula 30:} \; Pos(v_{12}) = \frac{1}{2}(Pos(v_1) + Pos(v_2)).$$

In formula 30, $Pos(v_1)$ and $Pos(v_2)$ are positions of vertices $v_1$ and $v_2$.
The same process is used to calculate texture coordinates of newly created vertices. For normal vectors, an additional normalization step is as follows:

$$\text{formula 31:} \; N(v_{12}) = \frac{N(v_1) + N(v_2)}{\|N(v_1) + N(v_2)\|},$$

where $N(v_{12})$, $N(v_1)$, and $N(v_2)$ correspond to normal vectors of vertices $v_{12}$, $v_1$, and $v_2$. $\|x\|$ is a modulo-2 operation on vector x.

(3) Calculating displacement information

Input: the refined mesh and original mesh (including attribute information).
Output: displacement information.

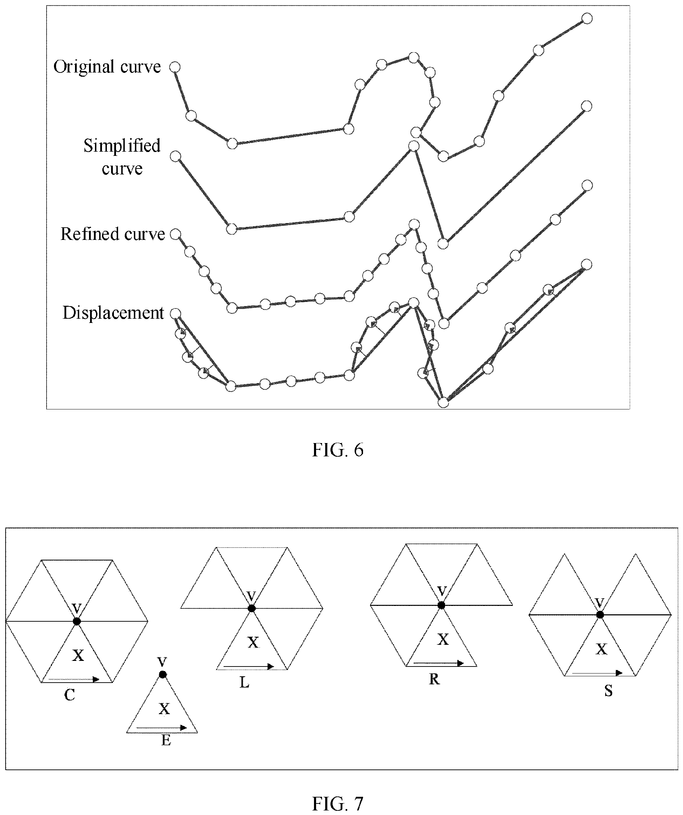

FIG. 6 shows a basic idea of a preprocessing solution by using a 2D curve. The same concept is applied to the input 3D mesh to generate the basemesh and a displacement field. In FIG. 6, an input 2D curve (represented by a 2D polyline) is referred to as an "original curve", and is first downsampled to generate a basic curve or polyline, which is referred to as a "simplified curve". Then the subdivision solution is applied to a plurality of lines obtained through simplification to generate a "refined curve or subdivided curve". Subsequently, the plurality of subdivided lines are deformed to obtain a better approximation of the original curve. In other words, a displacement vector (indicated by an arrow in FIG. 6) is calculated for each vertex of the subdivided mesh, so that a shape of a displacement curve is as close as possible to a shape of the original curve. These displacement vectors are displacement information output by the module.
In this embodiment of this application, a mesh encoder Draco in the related art may be used for the encoding of the basemesh. The encoding mainly includes five parts: quantization, encoding the connectivity, encoding the geometry information, encoding the UV coordinates, and encoding the texture map, which are described separately below.

(1) Quantization

Input: the geometry information and UV coordinates of the basemesh.
Output: quantized geometry information and UV coordinates.
First, three-dimensional coordinates of the vertices of the input mesh are quantized to obtain the quantized geometry information.
Assuming that three-dimensional coordinates of a vertex are (x, y, z), and that quantization coefficients are ($QP_x$, $QP_y$, $QP_z$), a process of calculating the quantized geometry information ($x_q$, $y_q$, $z_q$) is as follows:

$$\text{formula 32:} \; x_q = f_1(x, QP_x);$$

$$\text{formula } 33\colon \ y_q \ = \ f_1\big(y, QP_y\big);$$

and

$$\text{formula } 34\colon \ z_q \ = \ f_1\big(z, QP_z\big),$$

where a function $f_1$ in formula 32 to formula 34 is a quantization function, and an input of the quantization function is a coordinate of a dimension and a quantization coefficient of this dimension, and an output is a quantized coordinate value.

The function $f_1$ may be calculated in a variety of manners. A common calculation manner is shown in formulas 35 to 37, where the calculation is dividing an original coordinate of each dimension by a quantization coefficient of that dimension. "/" is a division operator, and a result of the division operation may be rounded in different ways, such as rounding off, rounding down, or rounding up.

$$\text{formula } 35\colon \ x_q \ = \ x \ / \ QP_x;$$

$$\text{formula } 36\colon \ y_q \ = \ y \ / \ QP_y;$$

and

$$\text{formula } 37\colon \ z_q \ = \ z \ / \ QP_z.$$

When the quantization coefficient is 2 raised to the power of an integer, the function $f_1$ may be implemented by using a bit operation, such as formula 38 to formula 40:

$$\text{formula } 38\colon \ x_q \ = \ x \gg \log_2 QP_x;$$

$$\text{formula } 39\colon \ y_q \ = \ y \gg \log_2 QP_y;$$

and

$$\text{formula } 40\colon \ z_q \ = \ z \gg \log_2 QP_z.$$

It should be noted that all the quantization coefficients $QP_x$, $QP_y$, and $QP_z$ may be set flexibly no matter which calculation manner is used for the function $f_1$. First, quantization coefficients of different components are not necessarily equal, correlation of the quantization parameters of different components may be used to establish relationships between $QP_x$, $QP_y$, and $QP_z$, and different quantization coefficients are set for different components. Second, quantization coefficients in different spatial regions are not necessarily equal, and the quantization parameters may be set adaptively based on sparsity of vertex distribution in local regions.

Quantization of two-dimensional UV coordinates is similar to quantization of three-dimensional coordinates, and there is one less dimension for quantization.

(2) Encoding the connectivity

Input: the connectivity of the basemesh.

Output: an encoded connectivity sub bitstream and a vertex encoding order.

An available method for encoding the connectivity is an Edgebreaker (EB) compression algorithm. The EB algorithm obtains a string sequence including five symbols: C, L, E, R and S, by traversing each triangle of a triangular mesh model, and then encodes this string sequence by using Huffman encoding method. Five operation modes defined in the EB are shown in FIG. 7. C indicates a topological situation in which a to-be-encoded vertex v is not on a boundary; L and R indicate that the to-be-encoded vertex v is on the boundary and that a current triangle has an edge e on the boundary in addition to a current edge, and L and R respectively indicate that e is in different directions of the current edge; S divides a mesh into two parts, and extra offset or other operations are needed to record branch information; and E indicates that all three edges of a triangle are on the boundary.

The algorithm encodes the mesh in a spiral form. In a process of traversing the mesh, a directed boundary composed of edges is always maintained, where the boundary divides the mesh into a traversed part and an untraversed part. Then every time a triangle is traversed, an operator of a topological relationship between the triangle and its boundary is output, and the polygon is included into an encoded part. A specific traversal process is as follows: First, any triangle is selected to form an initial boundary, and then any edge is selected as a current edge. The Edgebreaker algorithm uses five operators C, L, E, R, and S to record a topological relationship between the current triangle and the boundary. Depending on directions of arrows in different operators, a next edge is selected as a current edge, and an operation mode corresponding to a to-be-encoded vertex continues to be determined. The operations are cycled based on this step until all vertices are traversed. In this case, an operator string in the traversal process may be obtained and entropy-encoded. In addition, during use of the EB algorithm, an order of traversed vertices also needs to be output to a geometry information and UV coordinate encoding module. According to an encoding rule of the EB, a final entropy-encoded mode codeword is CCRRSLCRSERRELCRRRCRRRE.

(3) Encoding the geometry information

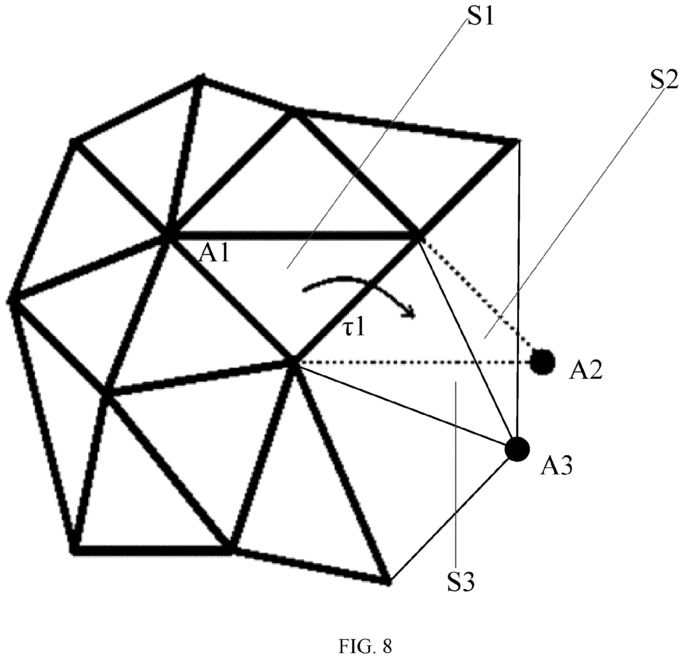

Input: the quantized geometry information, the connectivity, and an order of encoded vertices in the connectivity.
Output: the encoded connectivity sub bitstream.
In this embodiment of this application, the following parallelogram prediction method may be used to encode geometry coordinates.
As shown in FIG. 8, a triangle S1 is a triangle whose geometry coordinates have been encoded currently, and a traversal mode of vertices to be encoded is the same as the order of vertices in the encoded connectivity when the connectivity is encoded. When the connectivity is not encoded, the order of traversed vertices is the same as an order of vertices in the basemesh. During encoding traversal, one edge is selected as a currently traversed edge $\tau 1$, and a triangle formed by connecting another encoded vertex is used as a half parallelogram to predict three-dimensional geometry coordinates of a to-be-encoded vertex opposite to the current edge, that is, a point A2 in the figure is used as a predicted vertex. In this case, a coordinate residual between the predicted vertex and a real vertex (A3) is calculated and encoded by using entropy encoding, to form a geometry information sub bitstream. S2 is a predicted triangle and S3 is a to-be-encoded triangle.
In addition, two or three parallelograms may also be used herein to predict the to-be-encoded geometry coordinates, and a specific encoding method is not emphasized herein.

(4) Encoding UV coordinates (whether to encode UV coordinates is controlled by an identifier)

Input: the UV coordinates of the basemesh, the connectivity, and the order of encoded vertices in the connectivity.
Output: an encoded UV coordinate sub bitstream.
The following parallelogram prediction method may be used to encode the UV coordinates.
Referring to FIG. 8, the triangle S1 is a triangle whose UV coordinates have been encoded currently, and the traversal mode of the vertices to be encoded is the same as the order of vertices in the encoded connectivity when the connectivity is encoded. When the connectivity is not encoded, the order of traversed vertices is the same as the order of vertices in the basemesh. During encoding traversal, one edge is selected as the currently traversed edge $\tau 1$, and the triangle formed by connecting another encoded vertex is used as a half parallelogram to predict UV coordinates of the to-be-encoded vertex opposite to the current edge, that is, the point A2 in the figure is used as the predicted vertex. In this case, a coordinate residual between the predicted vertex and the real vertex is calculated and encoded by using entropy encoding, to form a UV coordinate sub bitstream.
In addition, two or three parallelograms may also be used herein to predict the to-be-encoded UV coordinates, and a specific encoding method is not emphasized herein.
If the identifier indicates that the UV coordinates do not need to be encoded, this module is skipped and the UV coordinates are not encoded.
After encoding of the basemesh is completed, it is necessary to decode the basemesh bitstream to obtain distorted geometry information and UV coordinates. If the identifier indicates that the UV coordinates are not to be encoded, the UV coordinates of the basemesh are used to correct a vertex offset. Based on the decoded geometry information and UV coordinates (whether to use the decoded UV coordinates or the UV coordinates of the basemesh before encoding is determined based on the identifier), a vertex displacement vector value in the displacement information is corrected. Then the updated displacement information is encoded, and a feasible encoding mode for the displacement information is a linear wavelet transform.

(1) Transforming and updating the displacement information

Input: the displacement information.
Output: transformed displacement information.
An update process is as follows:

$$\text{formula } 41: \; Signal(v) \leftarrow Signal(v) + \frac{1}{8}\text{i}_{w \in v^*} Signal(w),$$

where v* is a set of neighboring vertices of the vertex v, and *Signal*(*v*) is a geometric or attribute value of the vertex v.
A wavelet transform process is as follows:

$$\text{formula } 42: \; Signal(v) \leftarrow Signal(v) - \frac{1}{2}\big(Signal(v_1) + Signal(v_2)\big),$$

where v is a vertex inserted at a midpoint of an edge of $v_1$ and $v_2$, and *Signal*(*v*), *Signal*($v_1$), and *Signal*($v_2$) are geometric or attribute values of vertices v, $v_1$, and $v_2$ respectively.
Note: The update process in the solution may be skipped, that is, the displacement information is encoded directly without being updated.

(2) Encoding the transformed displacement information

Input: the transformed displacement information.
Output: the displacement information sub bitstream.
After the transformed displacement information is quantized, the transformed displacement information may be arranged into a 2D image by using the following methods:

Method 1: Traverse coefficients from a low frequency to a high frequency.
Method 2: For each coefficient, determine indexes of NxM pixel blocks that should be stored in a raster order of the blocks (for example, N=M=16). A position in the NxM pixel blocks is calculated by using a Morton order.

Other arrangement solutions such as a zigzag order and the raster order may also be used. The encoder may explicitly use a signal to notify a used arrangement solution in the bitstream.
After the information is arranged into the 2D image, any video encoder may be used to encode the image to obtain the displacement information sub bitstream.
Before the texture map is encoded, it is necessary to decode and dequantize the displacement information sub bitstream to obtain the distorted displacement information. This operation can ensure consistency of information used by the encoder and the decoder. The reconstructed basemesh and the distorted displacement information are used together to generate the reconstructed mesh. The reconstructed mesh and the original texture map are used to generate a new texture map.

(5) Regenerating a texture map

Input: the reconstructed mesh and original texture map.
Output: the newly generated texture map.
Algorithm steps for generating the new texture map by using the reconstructed mesh and the original texture map are as follows:

(a) First, calculate a bounding box (bounding box) of the original three-dimensional mesh to obtain a maximum search range.
(b) Calculate a boundary edge of the target three-dimensional mesh in texture space.
(c) Divide faces in the original three-dimensional mesh into uniform grids (grid).
(d) Traverse all faces in the target three-dimensional mesh, and rasterize a target texture map by using RGBA values corresponding to the original texture map.
(e) Calculate a bounding box of a current face in the texture space, then sample a center point of each pixel within a range of the bounding box, and determine a pixel position corresponding to the current face by determining internal and external relationships between the sampling point and the current face and whether an external sampling point at a boundary of the current face has impact on the current face in the texture space.

(f) Search, within the maximum search range, for points nearest to three points on the current face of the target three-dimensional mesh, in the original three-dimensional mesh that has been divided into uniform grids, and obtain a nearest face, where the face is a face corresponding to the current face, in the original mesh, thereby obtaining the texture coordinates corresponding to the current face, in the original three-dimensional mesh.

(g) Based on the corresponding texture coordinates, calculate RGBA values of pixels in corresponding positions of the original texture map, on the corresponding face in the original mesh, and assign the values to pixel positions corresponding to the current face in the target three-dimensional mesh, in the target texture map.

(h) Stop rasterization after all the faces are traversed.

(i) Convert alpha values of pixels on the boundary edge into 255 to smooth the boundary, and finally, to facilitate encoding and save the bitstream, use a pull push filling algorithm to fill the generated target texture map. (A choice to fill or not may be made)

For the new texture map, usually, the video encoder may be directly used to encode the texture map in a frame-by-frame manner, such as high efficiency video coding (High Efficiency Video Coding, HEVC), general video coding (VVC), or other encoders to form an attribute sub bitstream. The video encoder herein may be any video encoder selected.

Finally, all sub bitstreams are multiplexed to form an output mesh encoded bitstream.

In this embodiment of this application, the encoder encodes, based on the first identification information, the basemesh corresponding to the target three-dimensional mesh to obtain the first bitstream, where the basemesh includes the reconstructed texture coordinate information corresponding to the target three-dimensional mesh; the encoder obtains the second bitstream based on the mesh difference information; the encoder obtains the third bitstream based on the reconstructed texture map information; and the encoder generates the target bitstream based on the first bitstream, the second bitstream, and the third bitstream. Because an amount of reconstructed texture coordinate data accounts for a large proportion in the three-dimensional mesh, in this embodiment of this application, a choice not to encode the reconstructed texture coordinate information in the basemesh may be made based on the first identification information. Therefore, the bit rate can be greatly saved, and encoding efficiency can be improved.

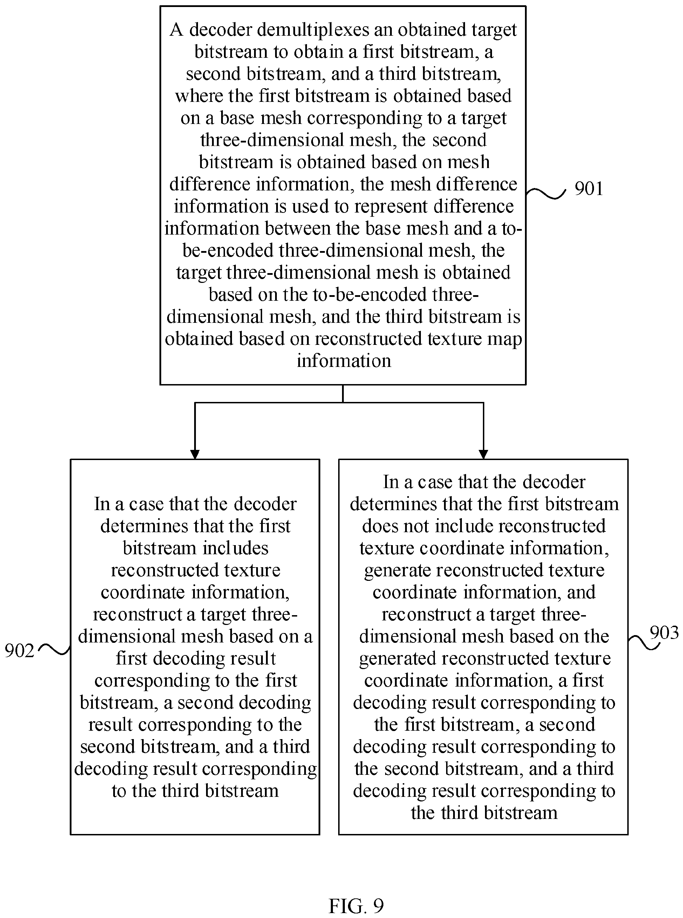

As shown in FIG. 9, an embodiment of this application further provides a decoding method, including the following steps.

Step 901: A decoder demultiplexes an obtained target bitstream to obtain a first bitstream, a second bitstream, and a third bitstream, where the first bitstream is obtained based on a basemesh corresponding to a target three-dimensional mesh, the second bitstream is obtained based on mesh difference information, the mesh difference information is used to represent difference information between the basemesh and a to-be-encoded three-dimensional mesh, the target three-dimensional mesh is obtained based on the to-be-encoded three-dimensional mesh, and the third bitstream is obtained based on reconstructed texture map information.

Step 902: In a case that the decoder determines that the first bitstream includes reconstructed texture coordinate information, reconstruct a target three-dimensional mesh based on a first decoding result corresponding to the first bitstream, a second decoding result corresponding to the second bitstream, and a third decoding result corresponding to the third bitstream.

Step 903: In a case that the decoder determines that the first bitstream does not include reconstructed texture coordinate information, generate reconstructed texture coordinate information, and reconstruct a target three-dimensional mesh based on the generated reconstructed texture coordinate information, a first decoding result corresponding to the first bitstream, a second decoding result corresponding to the second bitstream, and a third decoding result corresponding to the third bitstream.

In this embodiment of this application, based on first identification information, an encoder may choose not to encode the reconstructed texture coordinate information in the basemesh. In this case, the decoder may generate the reconstructed texture coordinate information based on decoded information. Therefore, in lossy mode, a bit rate can be greatly saved, and encoding efficiency can be improved.

Optionally, the method in this embodiment of this application further includes:

the decoder demultiplexes the obtained target bitstream to obtain the first identification information, where the first identification information is used to represent whether the encoder encodes the reconstructed texture coordinate information; and

the decoder determines, based on the first identification information, whether the first bitstream includes the reconstructed texture coordinate information.

In this embodiment of this application, the encoder encodes the first identification information used to indicate whether to encode the reconstructed texture coordinate information. In this way, the decoder can determine, based on the first identification information, whether it is necessary to generate the reconstructed texture coordinate information.

Optionally, after the decoder demultiplexes the obtained target bitstream to obtain the first bitstream, the second bitstream, and the third bitstream, the method further includes:

decoding the first bitstream to obtain the first decoding result; and
determining, based on the first decoding result, whether the first bitstream includes the reconstructed texture coordinate information.

In this embodiment of this application, the encoder may alternatively not encode the first identification information. In this case, the decoder may determine, based on the first decoding result, whether the reconstructed texture coordinate information is included.

Optionally, the first decoding result further includes:
geometry information and connectivity information corresponding to the target three-dimensional mesh.

Optionally, the generating reconstructed texture coordinate information includes:
generating the reconstructed texture coordinate information based on the geometry information and the connectivity information and according to a texture coordinate resampling algorithm.

Herein, the decoder uses the same UV coordinate generation method as the encoder to reconstruct UV coordinates and obtain the reconstructed texture coordinate information.

Optionally, that a decoder demultiplexes an obtained target bitstream to obtain a first bitstream, a second bitstream, and a third bitstream includes:

the decoder demultiplexes the obtained target bitstream to obtain the first bitstream, the second bitstream, the third bitstream, and a fourth bitstream, where the fourth bitstream is determined based on patch information of the target three-dimensional mesh; and
the reconstructing a target three-dimensional mesh based on a first decoding result corresponding to the first bitstream, a second decoding result corresponding to the second bitstream, and a third decoding result corresponding to the third bitstream includes: reconstructing the target three-dimensional mesh based on the first decoding result, the second decoding result, the third decoding result, and a fourth decoding result corresponding to the fourth bitstream; or the reconstructing a target three-dimensional mesh based on the generated reconstructed texture coordinate information, a first decoding result corresponding to the first bitstream, a second decoding result corresponding to the second bitstream, and a third decoding result corresponding to the third bitstream includes: reconstructing the target three-dimensional mesh based on the first decoding result, the second decoding result, the third decoding result, a fourth decoding result corresponding to the fourth bitstream, and the generated reconstructed texture coordinate information.

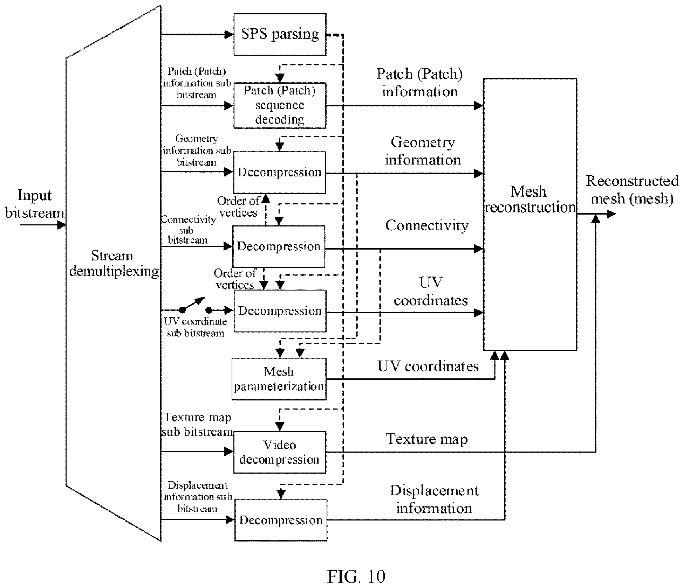

In this embodiment of this application, a three-dimensional mesh decoding framework is shown in FIG. 10. First, the target bitstream is demultiplexed into a patch information sub bitstream, a geometry information sub bitstream, a connectivity sub bitstream, a UV coordinate sub bitstream (if any), a texture map sub bitstream, and a displacement information sub bitstream. The sub bitstreams are decoded separately. If the bitstream includes the UV coordinate sub bitstream, it is unnecessary to regenerate the UV coordinates. If the bitstream does not include the UV coordinates, it is necessary to use a same UV coordinate generation algorithm as the encoder to regenerate the UV coordinates. Finally, the three-dimensional mesh is reconstructed by using various decoded information. The texture map sub bitstream and the displacement information sub bitstream are decoded by using a video decoder. The geometry information sub bitstream, the connectivity sub bitstream, and the UV coordinate sub bitstream are decoded by using a decoder corresponding to the encoding method at the encoder. The following describes the decoding of various information.

(1) Decoding a connectivity

Input: the to-be-decoded connectivity sub bitstream.
Output: a connectivity of the three-dimensional mesh and an order of decoded vertices.
First, the connectivity sub bitstream is decoded to obtain a mode string. Based on a corresponding mode in the string, the connectivity is reconstructed based on an encoding order, and attributes of vertices are traversed and output to a geometry information and UV coordinate decoding module.

(2) Decoding geometry information

Input: the geometry information sub bitstream, decoded displacement information, and a decoding order of the connectivity.
Output: geometry information of the three-dimensional mesh.
A process of decoding mesh geometry coordinates is a process reverse to the encoding process. First, entropy decoding is performed to obtain a coordinate prediction residual. Then predicted coordinates of a to-be-decoded point are predicted based on a decoded triangle and according to a parallelogram rule. A residual value obtained through entropy decoding is added to the predicted coordinates to obtain a to-be-decoded geometry coordinate position. An order of traversed vertices herein is the same as the order of vertices in the encoded connectivity when the connectivity is encoded. When the connectivity is not encoded, the order of traversed vertices is the same as the order of vertices in the basemesh. Note: Predictive encoding is not used for geometry coordinates of an initial triangle; instead, geometry coordinate values of the initial triangle are directly encoded. After the decoder decodes the geometry coordinates of the triangle, the decoder uses the triangle as the initial triangle, and starts traversing and decoding geometry coordinates of vertices of other triangles. In addition, two or three parallelograms may also be used herein to predict the to-be-decoded UV coordinates, and a specific prediction method is not emphasized.

After the geometry information is decoded, it is necessary to use the decoded displacement information to correct the decoded geometry information. A correction mode is to use a displacement value in the displacement information to displace the corresponding vertex along a normal vector direction. Finally, corrected geometry information is obtained.

(3) Decoding and reconstructing UV coordinates (whether to decode the UV coordinates is determined based on a first identifier)

Input: the to-be-decoded UV coordinate bitstream, the decoded and corrected geometry information, and the decoding order of the connectivity.

Output: reconstructed UV coordinate information of the three-dimensional mesh.

If the bitstream includes the UV coordinate sub bitstream, a process of decoding mesh UV coordinates is a process reverse to the encoding process: First, entropy decoding is performed to obtain a coordinate prediction residual. Then predicted coordinates of the to-be-decoded point are predicted based on the decoded triangle and according to the parallelogram rule. A residual value obtained through entropy decoding is added to the predicted coordinates to obtain a to-be-decoded UV coordinate position. Note: Predictive encoding is not used for UV coordinates of the initial triangle; instead, UV coordinate values of the initial triangle are directly encoded. After the decoder decodes the UV coordinates of the triangle, the decoder uses the triangle as the initial triangle, and starts traversing and decoding UV coordinates of vertices of other triangles. In addition, two or three parallelograms may also be used herein to predict the to-be-decoded UV coordinates, and a specific prediction method is not emphasized.

If the bitstream does not include the UV coordinate sub bitstream, the decoder uses the same UV coordinate generation algorithm as the encoder and uses the decoded geometry information and the connectivity to generate the UV coordinates.

After the UV coordinates are decoded or reconstructed, it is necessary to use the decoded displacement information to correct the decoded UV coordinates. A correction mode is to use the displacement value in the displacement information to displace the corresponding vertex along the normal vector direction. Finally, the corrected UV coordinates are obtained.

(4) Decoding the texture map

Input: the texture map sub bitstream.

Output: the texture map.

The texture map is decoded directly by using the video decoder, and the texture map may be obtained frame by frame. Herein, a file format of the texture map is not emphasized, and the format may be jpg, png, or the like.

In this embodiment of this application, based on first identification information, the encoder may choose not to encode the reconstructed texture coordinate information in the basemesh. In this case, the decoder may generate the reconstructed texture coordinate information based on the decoded information. Therefore, in lossy mode, the bit rate can be greatly saved, and encoding efficiency can be improved.

The encoding method provided in the embodiments of this application may be performed by an encoding apparatus. An encoding apparatus provided in the embodiments of this application is described by assuming that the encoding apparatus performs the encoding method in the embodiments of this application.

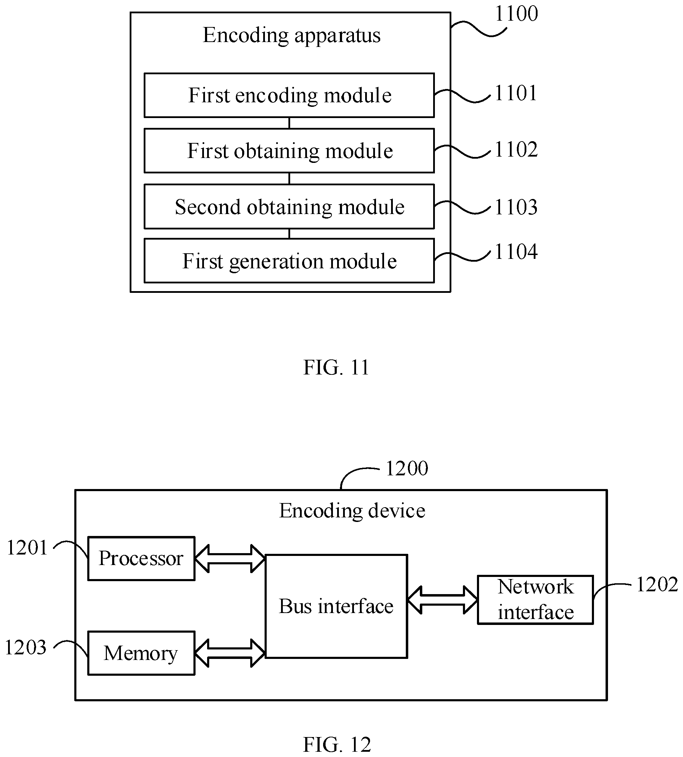

As shown in FIG. 11, an embodiment of this application further provides an encoding apparatus 1100. The apparatus is applied to an encoder and includes:

a first encoding module 1101, configured to encode, based on first identification information, a basemesh corresponding to a target three-dimensional mesh to obtain a first bitstream, where the basemesh includes reconstructed texture coordinate information corresponding to the target three-dimensional mesh, and the first identification information is used to represent whether to encode the reconstructed texture coordinate information;

a first obtaining module 1102, configured to obtain a second bitstream based on mesh difference information, where the mesh difference information is used to represent difference information between the basemesh and a to-be-encoded three-dimensional mesh, and the target three-dimensional mesh is obtained based on the to-be-encoded three-dimensional mesh;

a second obtaining module 1103, configured to obtain a third bitstream based on reconstructed texture map information, where the reconstructed texture map information is obtained based on the first bitstream and the second bitstream; and

a first generation module 1104, configured to generate a target bitstream based on the first bitstream, the second bitstream, and the third bitstream.

Optionally, the first generation module includes:

a first obtaining submodule, configured to encode the first identification information to obtain encoded first identification information; and

a first generation submodule, configured to generate the target bitstream based on the encoded first identification information, the first bitstream, and the second bitstream.

Optionally, the basemesh further includes geometry information and connectivity information corresponding to the target three-dimensional mesh.

Optionally, the first encoding module is configured to:

in a case that the first identification information represents encoding of the reconstructed texture coordinate information corresponding to the target three-dimensional mesh, encode the geometry information, the connectivity information, and the reconstructed texture coordinate information to obtain the first bitstream; and/or

in a case that the first identification information represents non encoding of the reconstructed texture coordinate information corresponding to the target three-dimensional mesh, encode the geometry information and the connectivity information to obtain the first bitstream.

Optionally, the apparatus in this embodiment of this application further includes:

a third obtaining module, configured to decode and dequantize the first bitstream to obtain a reconstructed basemesh before the second obtaining module obtains the third bitstream based on the reconstructed texture map information;

a fourth obtaining module, configured to decode and dequantize the second bitstream to obtain target mesh difference information; and

a second generation module, configured to generate the reconstructed texture map information based on the reconstructed basemesh and the target mesh difference information and according to a texture map generation algorithm.

Optionally, the first obtaining module includes:

a second obtaining submodule, configured to decode the first bitstream to obtain a reconstructed mesh corresponding to the first bitstream;

an updating submodule, configured to update the mesh difference information based on the reconstructed mesh to obtain updated mesh difference information; and

a first encoding submodule, configured to encode the updated mesh difference information to obtain the second bitstream.

Optionally, the apparatus in this embodiment of this application further includes:

a fifth obtaining module, configured to: before the first encoding module encodes, based on the first identification information, the basemesh corresponding to the target three-dimensional mesh to obtain the first bitstream, in lossy encoding mode, simplify the to-be-encoded three-dimensional mesh to obtain the target three-dimensional mesh; or in lossless encoding mode, determine that the to-be-encoded three-dimensional mesh is the target three-dimensional mesh.

Optionally, the first generation module includes:

a third obtaining submodule, configured to obtain a fourth bitstream based on patch information of the target three-dimensional mesh; and

a fourth obtaining submodule, configured to obtain the target bitstream based on the first bitstream, the second bitstream, the third bitstream, and the fourth bitstream.

In this embodiment of this application, the encoder encodes, based on the first identification information, the basemesh corresponding to the target three-dimensional mesh to obtain the first bitstream, obtains the second bitstream based on the mesh difference information, and generates the target bitstream based on the first bitstream and the second bitstream. Because an amount of reconstructed texture coordinate data accounts for a large proportion in the three-dimensional mesh, in this embodiment of this application, a choice not to encode the reconstructed texture coordinate information in the basemesh may be made based on the first identification information. Therefore, a bit rate can be greatly saved, and encoding efficiency can be improved.

The apparatus embodiment corresponds to the foregoing encoding method embodiment shown in FIG. 1, and each implementation process and implementation of the encoder in the foregoing method embodiment can be applied to the apparatus embodiment, with the same technical effect achieved.

Specifically, an embodiment of this application further provides an encoding device. As shown in FIG. 12, the encoding device 1200 includes a processor 1201, a network interface 1202, and a memory 1203. The network interface 1202 is, for example, a common public radio interface (common public radio interface, CPRI).

Specifically, the encoding device 1200 in this embodiment of this application further includes a program or instructions stored in the memory 1203 and capable of running on the processor 1201. The processor 1201 invokes the program or instructions in the memory 1203 to perform the method performed by each module shown in FIG. 11, with the same technical effect achieved. To avoid repetition, details are not described herein again.

The decoding method provided in the embodiments of this application may be performed by a decoding apparatus. A decoding apparatus provided in the embodiments of this application is described by assuming that the decoding apparatus performs the decoding method in the embodiments of this application.

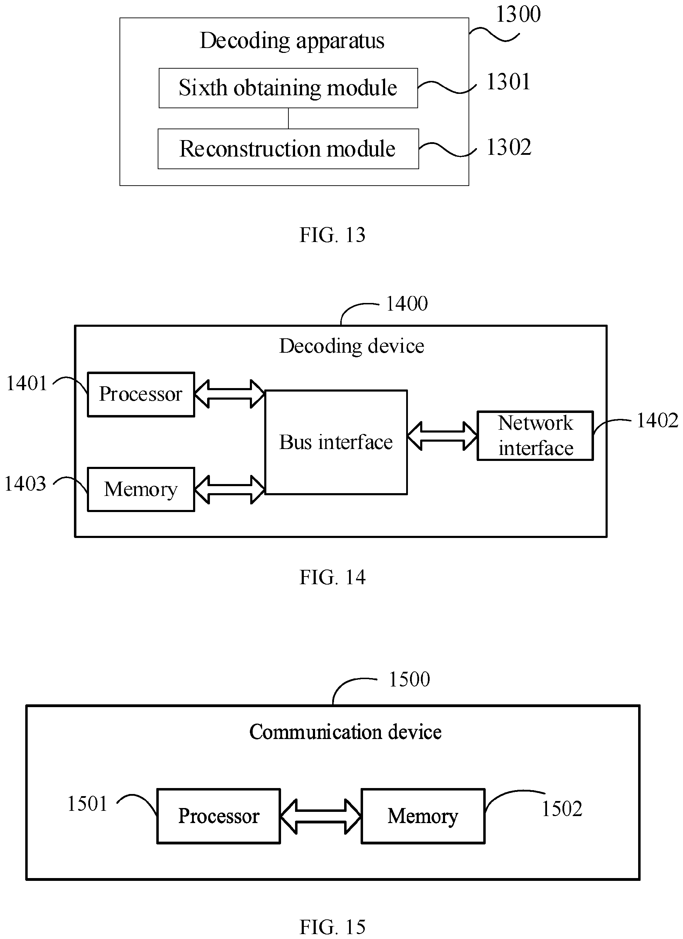

As shown in FIG. 13, an embodiment of this application further provides a decoding apparatus 1300. The apparatus is applied to a decoder and includes:

a sixth obtaining module 1301, configured to demultiplex an obtained target bitstream to obtain a first bitstream, a second bitstream, and a third bitstream, where the first bitstream is obtained based on a basemesh corresponding to a target three-dimensional mesh, the second bitstream is obtained based on mesh difference information, the mesh difference information is used to represent difference information between the basemesh and a to-be-encoded three-dimensional mesh, the target three-dimensional mesh is obtained based on the to-be-encoded three-dimensional mesh, and the third bitstream is obtained based on reconstructed texture map information; and

a reconstruction module 1302, configured to: in a case that the decoder determines that the first bitstream includes reconstructed texture coordinate information, reconstruct a target three-dimensional mesh based on a first decoding result corresponding to the first bitstream, a second decoding result corresponding to the second bitstream, and a third decoding result corresponding to the third bitstream; and/or in a case that the decoder determines that the first bitstream does not include reconstructed texture coordinate information, generate reconstructed texture coordinate information, and reconstruct a target three-dimensional mesh based on the generated reconstructed texture coordinate information, a first decoding result corresponding to the first bitstream, a second decoding result corresponding to the second bitstream, and a third decoding result corresponding to the third bitstream.

Optionally, the apparatus in this embodiment of this application further includes:

a seventh obtaining module, configured to demultiplex the obtained target bitstream to obtain first identification information, where the first identification information is used to represent whether an encoder encodes the reconstructed texture coordinate information; and

a first determining module, configured to determine, based on the first identification information, whether the first bitstream includes the reconstructed texture coordinate information.

Optionally, the apparatus in this embodiment of this application further includes:

an eighth obtaining module, configured to decode the first bitstream to obtain the first decoding result after the sixth obtaining module demultiplexes the obtained target bitstream to obtain the first bitstream, the second bitstream, and the third bitstream; and

a second determining module, configured to determine, based on the first decoding result, whether the first bitstream includes the reconstructed texture coordinate information.

Optionally, the first decoding result further includes:
geometry information and connectivity information corresponding to the target three-dimensional mesh.
Optionally, the reconstruction module is configured to generate the reconstructed texture coordinate information based on the geometry information and the connectivity information and according to a texture coordinate resampling algorithm.

Optionally, the sixth obtaining module is configured to demultiplex the obtained target bitstream to obtain the first bitstream, the second bitstream, the third bitstream, and a fourth bitstream, where the fourth bitstream is determined based on patch information of the target three-dimensional mesh; and

the reconstruction module is configured to: reconstruct the target three-dimensional mesh based on the first decoding result, the second decoding result, the third decoding result, and a fourth decoding result corresponding to the fourth bitstream; or reconstruct the target three-dimensional mesh based on the first decoding result, the second decoding result, the third decoding result, a fourth decoding result corresponding to the fourth bitstream, and the generated reconstructed texture coordinate information.

In this embodiment of this application, based on first identification information, an encoder may choose not to encode the reconstructed texture coordinate information in the basemesh. In this case, the decoder may generate the reconstructed texture coordinate information based on decoded information. Therefore, in lossy mode, a bit rate can be greatly saved, and encoding efficiency can be improved.

It should be noted that this apparatus embodiment is an apparatus corresponding to the foregoing method embodiment shown in FIG. 9. All implementations about the decoder in the foregoing method embodiment are applicable to this apparatus embodiment, with the same technical effect achieved. Details are not described herein again.

An embodiment of this application further provides a decoding device, including a processor, a memory, and a program or instructions stored in the memory and capable of running on the processor. When the program or instructions are executed by the processor, each process of the foregoing decoding method embodiment is implemented, with the same technical effect achieved. To avoid repetition, details are not described herein again.

An embodiment of this application further provides an encoding device, including a processor, a memory, and a program or instructions stored in the memory and capable of running on the processor. When the program or instructions are executed by the processor, each process of the foregoing encoding method embodiment is implemented, with the same technical effect achieved. To avoid repetition, details are not described herein again.

An embodiment of this application further provides a readable storage medium. The computer-readable storage medium stores a program or instructions. When the program or instructions are executed by a processor, each process of the foregoing encoding method embodiment or decoding method embodiment is implemented, with the same technical effect achieved. To avoid repetition, details are not described herein again.

The processor is a processor in the decoding device described in the foregoing embodiment. The readable storage medium includes a computer-readable storage medium, such as a computer read-only memory ROM, a random access memory RAM, a magnetic disk, or an optical disc.

The computer-readable storage medium is, for example, a read-only memory (Read-Only Memory, ROM), a random access memory (Random Access Memory, RAM), a magnetic disk, or an optical disc.

An embodiment of this application further provides an encoding device, including a processor and a communication interface. The processor is configured to: encode, based on first identification information, a basemesh corresponding to a target three-dimensional mesh to obtain a first bitstream, where the basemesh includes reconstructed texture coordinate information corresponding to the target three-dimensional mesh, and the first identification information is used to represent whether to encode the reconstructed texture coordinate information; obtain a second bitstream based on mesh difference information, where the mesh difference information is used to represent difference information between the basemesh and a to-be-encoded three-dimensional mesh, and the target three-dimensional mesh is obtained based on the to-be-encoded three-dimensional mesh; obtain a third bitstream based on reconstructed texture map information, where the reconstructed texture map information is obtained based on the first bitstream and the second bitstream; and generate a target bitstream based on the first bitstream, the second bitstream, and the third bitstream.

The encoding device embodiment corresponds to the foregoing encoding method embodiment, and each implementation process and implementation of the foregoing method embodiment can be applied to the encoding device embodiment, with the same technical effect achieved.

An embodiment of this application further provides a decoding device, including a processor and a communication interface. The processor is configured to: demultiplex an obtained target bitstream to obtain a first bitstream, a second bitstream, and a third bitstream, where the first bitstream is obtained based on a basemesh corresponding to a target three-dimensional mesh, the second bitstream is obtained based on mesh difference information, the mesh difference information is used to represent difference information between the basemesh and a to-be-encoded three-dimensional mesh, the target three-dimensional mesh is obtained based on the to-be-encoded three-dimensional mesh, and the third bitstream is obtained based on reconstructed texture map information; and in a case that the first bitstream includes reconstructed texture coordinate information, reconstruct a target three-dimensional mesh based on a first decoding result corresponding to the first bitstream, a second decoding result corresponding to the second bitstream, and a third decoding result corresponding to the third bitstream; or in a case that the first bitstream does not include reconstructed texture coordinate information, generate reconstructed texture coordinate information, and reconstruct a target three-dimensional mesh based on the generated reconstructed texture coordinate information, a first decoding result corresponding to the first bitstream, a second decoding result corresponding to the second bitstream, and a third decoding result corresponding to the third bitstream.

The decoding device embodiment corresponds to the foregoing decoding method embodiment, and each implementation process and implementation of the foregoing method embodiment can be applied to the decoding device embodiment, with the same technical effect achieved.

Specifically, an embodiment of this application further provides a decoding device. Specifically, a structure of the decoding device is shown in FIG. 14. The decoding device 1400 includes a processor 1401, a network interface 1402, and a memory 1403. The network interface 1402 is, for example, a common public radio interface (common public radio interface, CPRI). Specifically, the decoding device 1400 in this embodiment of this application further includes a program or instructions stored in the memory 1403 and capable of running on the processor 1401. When the processor 1401 invokes the program or instructions in the memory 1403, the method performed by each module shown in FIG. 13 is performed, with the same technical effect achieved. To avoid repetition, details are not described herein again.

Optionally, as shown in FIG. 15, an embodiment of this application further provides a communication device 1500, including a processor 1501 and a memory 1502. The memory 1502 stores a program or instructions capable of running on the processor 1501. For example, when the communication device 1500 is an encoding device, and the program or instructions are executed by the processor 1501, the steps of the foregoing encoding method embodiment are implemented, with the same technical effect achieved. When the communication device 1500 is a decoding device, and the program or instructions are executed by the processor 1501, the steps of the foregoing decoding method embodiment are implemented, with the same technical effect achieved. To avoid repetition, details are not described herein again.

In addition, an embodiment of this application provides a chip. The chip includes a processor and a communication interface. The communication interface is coupled to the processor. The processor is configured to run a program or instructions to implement each process of the foregoing encoding method embodiment or decoding method embodiment, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing encoding method embodiment or decoding method embodiment, with the same technical effect achieved. To avoid repetition, details are not described herein again.

An embodiment of this application further provides a communication system, including at least an encoding device and a decoding device. The encoding device may be the encoding device shown in FIG. 12, and may be configured to perform the steps of the encoding method shown in FIG. 1; and the decoding device may be the decoding device shown in FIG. 14, and may be configured to perform the steps of the decoding method shown in FIG. 9, with the same technical effects achieved. To avoid repetition, details are not described herein again.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the related art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

**Claims**

1. An encoding method, comprising:

encoding, by an encoder based on first identification information, a basemesh corresponding to a target three-dimensional mesh to obtain a first bitstream, wherein the basemesh comprises reconstructed texture coordinate information corresponding to the target three-dimensional mesh, and the first identification information is used to represent whether to encode the reconstructed texture coordinate information;

obtaining, by the encoder, a second bitstream based on mesh difference information, wherein the mesh difference information is used to represent difference information between the basemesh and a to-be-encoded three-dimensional mesh, and the target three-dimensional mesh is obtained based on the to-be-encoded three-dimensional mesh;

obtaining, by the encoder, a third bitstream based on reconstructed texture map information, wherein the reconstructed texture map information is obtained based on the first bitstream and the second bitstream; and

generating, by the encoder, a target bitstream based on the first bitstream, the second bitstream, and the third bitstream.

2. The method according to claim 1, wherein the generating, by the encoder, a target bitstream based on the first bitstream and the second bitstream comprises:

encoding the first identification information to obtain encoded first identification information; and

generating the target bitstream based on the encoded first identification information, the first bitstream, and the second bitstream.

3. The method according to claim 1, wherein the basemesh further comprises geometry information and connectivity information corresponding to the target three-dimensional mesh.

4. The method according to claim 3, wherein the encoding, by an encoder based on first identification information, a basemesh corresponding to a target three-dimensional mesh to obtain a first bitstream comprises:

in a case that the first identification information represents encoding of the reconstructed texture coordinate information corresponding to the target three-dimensional mesh, encoding the geometry information, the connectivity information, and the reconstructed texture coordinate information to obtain the first bitstream; and/or

in a case that the first identification information represents non encoding of the reconstructed texture coordinate information corresponding to the target three-dimensional mesh, encoding the geometry information and the connectivity information to obtain the first bitstream.

5. The method according to claim 3, wherein before the obtaining, by the encoder, a third bitstream based on reconstructed texture map information, the method further comprises:

decoding and dequantizing the first bitstream to obtain a reconstructed basemesh;

decoding and dequantizing the second bitstream to obtain target mesh difference information; and

generating the reconstructed texture map information based on the reconstructed basemesh and the target mesh difference information and according to a texture map generation algorithm.

6. The method according to claim 1, wherein the obtaining, by the encoder, a second bitstream based on mesh difference information comprises:

decoding the first bitstream to obtain a reconstructed mesh corresponding to the first bitstream;

updating the mesh difference information based on the reconstructed mesh to obtain updated mesh difference information; and

encoding the updated mesh difference information to obtain the second bitstream.

7. The method according to claim 1, wherein before the encoding, by an encoder based on first identification information, a basemesh corresponding to a target three-dimensional mesh to obtain a first bitstream, the method further comprises:

in lossy encoding mode, simplifying the to-be-encoded three-dimensional mesh to obtain the target three-dimensional mesh; or

in lossless encoding mode, determining that the to-be-encoded three-dimensional mesh is the target three-dimensional mesh.

8. The method according to claim 1, wherein the generating, by the encoder, a target bitstream based on the first bitstream, the second bitstream, and the third bitstream comprises:

obtaining a fourth bitstream based on patch information of the target three-dimensional mesh; and
obtaining the target bitstream based on the first bitstream, the second bitstream, the third bitstream, and the fourth bitstream.

9. A decoding method, comprising:

demultiplexing, by a decoder, an obtained target bitstream to obtain a first bitstream, a second bitstream, and a third bitstream, wherein the first bitstream is obtained based on a basemesh corresponding to a target three-dimensional mesh, the second bitstream is obtained based on mesh difference information, the mesh difference information is used to represent difference information between the basemesh and a to-be-encoded three-dimensional mesh, the target three-dimensional mesh is obtained based on the to-be-encoded three-dimensional mesh, and the third bitstream is obtained based on reconstructed texture map information; and

in a case that the decoder determines that the first bitstream comprises reconstructed texture coordinate information, reconstructing a target three-dimensional mesh based on a first decoding result corresponding to the first bitstream, a second decoding result corresponding to the second bitstream, and a third decoding result corresponding to the third bitstream; and/or

in a case that the decoder determines that the first bitstream does not comprise reconstructed texture coordinate information, generating reconstructed texture coordinate information, and reconstructing a target three-dimensional mesh based on the generated reconstructed texture coordinate information, a first decoding result corresponding to the first bitstream, a second decoding result corresponding to the second bitstream, and a third decoding result corresponding to the third bitstream.

10. The method according to claim 9, further comprising:

demultiplexing, by the decoder, the obtained target bitstream to obtain first identification information, wherein the first identification information is used to represent whether an encoder encodes the reconstructed texture coordinate information; and

determining, based on the first identification information, whether the first bitstream comprises the reconstructed texture coordinate information.

11. The method according to claim 9, wherein after the demultiplexing, by a decoder, an obtained target bitstream to obtain a first bitstream, a second bitstream, and a third bitstream, the method further comprises:

decoding the first bitstream to obtain the first decoding result; and
determining, based on the first decoding result, whether the first bitstream comprises the reconstructed texture coordinate information.

12. The method according to any one of claims 9 to 11, wherein the first decoding result further comprises:
geometry information and connectivity information corresponding to the target three-dimensional mesh.

13. The method according to claim 12, wherein the generating reconstructed texture coordinate information comprises:
generating the reconstructed texture coordinate information based on the geometry information and the connectivity information and according to a texture coordinate resampling algorithm.

14. The method according to claim 9, wherein the demultiplexing, by a decoder, an obtained target bitstream to obtain a first bitstream, a second bitstream, and a third bitstream comprises:

demultiplexing, by the decoder, the obtained target bitstream to obtain the first bitstream, the second bitstream, the third bitstream, and a fourth bitstream, wherein the fourth bitstream is determined based on patch information of the target three-dimensional mesh; and

the reconstructing a target three-dimensional mesh based on a first decoding result corresponding to the first bitstream, a second decoding result corresponding to the second bitstream, and a third decoding result corresponding to the third bitstream comprises: reconstructing the target three-dimensional mesh based on the first decoding result, the second decoding result, the third decoding result, and a fourth decoding result corresponding to the fourth bitstream; or the reconstructing a target three-dimensional mesh based on the generated reconstructed texture coordinate information, a first decoding result corresponding to the first bitstream, a second decoding result corresponding to the second bitstream, and a third decoding result corresponding to the third bitstream comprises: reconstructing the target three-dimensional mesh based on the first decoding result, the second decoding result, the third decoding result, a fourth decoding result corresponding to the fourth bitstream, and the generated reconstructed texture coordinate information.

15. An encoding apparatus, applied to an encoder and comprising:

a first encoding module, configured to encode, based on first identification information, a basemesh corresponding to a target three-dimensional mesh to obtain a first bitstream, wherein the basemesh comprises reconstructed texture coordinate information corresponding to the target three-dimensional mesh, and the first identification information is used to represent whether to encode the reconstructed texture coordinate information;

a first obtaining module, configured to obtain a second bitstream based on mesh difference information, wherein the mesh difference information is used to represent difference information between the basemesh and a to-be-encoded three-dimensional mesh, and the target three-dimensional mesh is obtained based on the to-be-encoded three-dimensional mesh;

a second obtaining module, configured to obtain a third bitstream based on reconstructed texture map information, wherein the reconstructed texture map information is obtained based on the first bitstream and the second bitstream; and

a first generation module, configured to generate a target bitstream based on the first bitstream, the second bitstream, and the third bitstream.

16. The apparatus according to claim 15, wherein the first generation module comprises:

a first obtaining submodule, configured to encode the first identification information to obtain encoded first identification information; and

a first generation submodule, configured to generate the target bitstream based on the encoded first identification information, the first bitstream, and the second bitstream.

17. The apparatus according to claim 15, wherein the basemesh further comprises geometry information and connectivity information corresponding to the target three-dimensional mesh.

18. The apparatus according to claim 17, wherein the first encoding module is configured to:

in a case that the first identification information represents encoding of the reconstructed texture coordinate information corresponding to the target three-dimensional mesh, encode the geometry information, the connectivity information, and the reconstructed texture coordinate information to obtain the first bitstream; and/or

in a case that the first identification information represents non encoding of the reconstructed texture coordinate information corresponding to the target three-dimensional mesh, encode the geometry information and the connectivity information to obtain the first bitstream.

19. The apparatus according to claim 17, further comprising:

a third obtaining module, configured to decode and dequantize the first bitstream to obtain a reconstructed basemesh before the second obtaining module obtains the third bitstream based on the reconstructed texture map information;

a fourth obtaining module, configured to decode and dequantize the second bitstream to obtain target mesh difference information; and

a second generation module, configured to generate the reconstructed texture map information based on the reconstructed basemesh and the target mesh difference information and according to a texture map generation algorithm.

20. The apparatus according to claim 15, wherein the first obtaining module comprises:

a second obtaining submodule, configured to decode the first bitstream to obtain a reconstructed mesh corresponding to the first bitstream;

an updating submodule, configured to update the mesh difference information based on the reconstructed mesh to obtain updated mesh difference information; and

a first encoding submodule, configured to encode the updated mesh difference information to obtain the second bitstream.

21. The apparatus according to claim 15, further comprising:
a fifth obtaining module, configured to: before the first encoding module encodes, based on the first identification information, the basemesh corresponding to the target three-dimensional mesh to obtain the first bitstream, in lossy encoding mode, simplify the to-be-encoded three-dimensional mesh to obtain the target three-dimensional mesh; or in lossless encoding mode, determine that the to-be-encoded three-dimensional mesh is the target three-dimensional mesh.

22. The apparatus according to claim 15, wherein the first generation module comprises:

a third obtaining submodule, configured to obtain a fourth bitstream based on patch information of the target three-dimensional mesh; and

a fourth obtaining submodule, configured to obtain the target bitstream based on the first bitstream, the second bitstream, the third bitstream, and the fourth bitstream.

23. A decoding apparatus, applied to a decoder and comprising:

a sixth obtaining module, configured to demultiplex an obtained target bitstream to obtain a first bitstream, a second bitstream, and a third bitstream, wherein the first bitstream is obtained based on a basemesh corresponding to a target three-dimensional mesh, the second bitstream is obtained based on mesh difference information, the mesh difference information is used to represent difference information between the basemesh and a to-be-encoded three-dimensional mesh, the target three-dimensional mesh is obtained based on the to-be-encoded three-dimensional mesh, and the third bitstream is obtained based on reconstructed texture map information; and

a reconstruction module, configured to: in a case that the decoder determines that the first bitstream comprises reconstructed texture coordinate information, reconstruct a target three-dimensional mesh based on a first decoding result corresponding to the first bitstream, a second decoding result corresponding to the second bitstream, and a third decoding result corresponding to the third bitstream; and/or in a case that the decoder determines that the first bitstream does not comprise reconstructed texture coordinate information, generate reconstructed texture coordinate information, and reconstruct a target three-dimensional mesh based on the generated reconstructed texture coordinate information, a first decoding result corresponding to the first bitstream, a second decoding result corresponding to the second bitstream, and a third decoding result corresponding to the third bitstream.

24. The apparatus according to claim 23, further comprising:

a seventh obtaining module, configured to demultiplex the obtained target bitstream to obtain first identification information, wherein the first identification information is used to represent whether an encoder encodes the reconstructed texture coordinate information; and

a first determining module, configured to determine, based on the first identification information, whether the first bitstream comprises the reconstructed texture coordinate information.

25. The apparatus according to claim 23, further comprising:

an eighth obtaining module, configured to decode the first bitstream to obtain the first decoding result after the sixth obtaining module demultiplexes the obtained target bitstream to obtain the first bitstream, the second bitstream, and the third bitstream; and

a second determining module, configured to determine, based on the first decoding result, whether the first bitstream comprises the reconstructed texture coordinate information.

26. The apparatus according to any one of claims 23 to 25, wherein the first decoding result further comprises:
geometry information and connectivity information corresponding to the target three-dimensional mesh.

27. The apparatus according to claim 26, wherein the reconstruction module is configured to generate the reconstructed texture coordinate information based on the geometry information and the connectivity information and according to a texture coordinate resampling algorithm.

28. The apparatus according to claim 23, wherein the sixth obtaining module is configured to demultiplex the obtained target bitstream to obtain the first bitstream, the second bitstream, the third bitstream, and a fourth bitstream, wherein the fourth bitstream is determined based on patch information of the target three-dimensional mesh; and
the reconstruction module is configured to: reconstruct the target three-dimensional mesh based on the first decoding result, the second decoding result, the third decoding result, and a fourth decoding result corresponding to the fourth bitstream; or reconstruct the target three-dimensional mesh based on the first decoding result, the second decoding result, the third decoding result, a fourth decoding result corresponding to the fourth bitstream, and the generated reconstructed texture coordinate information.

29. An encoding device, comprising a processor and a memory, wherein the memory stores a program or instructions capable of running on the processor, and when the program or instructions are executed by the processor, the steps of the encoding method according to any one of claims 1 to 8 are implemented.

30. A decoding device, comprising a processor and a memory, wherein the memory stores a program or instructions capable of running on the processor, and when the program or instructions are executed by the processor, the steps of the decoding method according to any one of claims 9 to 14 are implemented.

31. A readable storage medium, wherein the readable storage medium stores a program or instructions, and when the program or instructions are executed by a processor, the steps of the encoding method according to any one of claims 1 to 8 are implemented, or the steps of the decoding method according to any one of claims 9 to 14 are implemented.

An encoder encodes, based on first identification information, a base mesh corresponding to a target three-dimensional mesh to obtain a first bitstream, where the base mesh includes reconstructed texture coordinate information corresponding to the target three-dimensional mesh, and the first identification information is used to represent whether to encode the reconstructed texture coordinate information ~ 101

The encoder obtains a second bitstream based on mesh difference information, where the mesh difference information is used to represent difference information between the base mesh and a to-be-encoded three-dimensional mesh, and the target three-dimensional mesh is obtained based on the to-be-encoded three-dimensional mesh ~ 102

The encoder obtains a third bitstream based on reconstructed texture map information, where the reconstructed texture map information is obtained based on the first bitstream and the second bitstream ~ 103

The encoder generates a target bitstream based on the first bitstream, the second bitstream, and the third bitstream ~ 104

FIG. 1

FIG. 2

EP 4 535 287 A1

Input mesh (mesh)
including a
png texture

Simplified mesh

Base mesh

```
┌──────────────┐        ┌──────────────┐
│    Mesh      │ ─────▶ │    Mesh      │ ─────▶
│ simplification│        │parameterization│
└──────────────┘        └──────────────┘
```

Base mesh

```
┌──────────────┐        ┌────────────────────┐
│ Base mesh surface│ ──▶│Vertex displacement │
│   refinement     │    │    vector and      │
│                  │    │    displacement    │
│                  │    │    information     │
│                  │    │    calculation     │
└──────────────┘        └────────────────────┘
```

Displacement
information

FIG. 3

FIG. 4

FIG. 5

FIG. 6

FIG. 7

FIG. 8

A decoder demultiplexes an obtained target bitstream to obtain a first bitstream, a second bitstream, and a third bitstream, where the first bitstream is obtained based on a base mesh corresponding to a target three-dimensional mesh, the second bitstream is obtained based on mesh difference information, the mesh difference information is used to represent difference information between the base mesh and a to-be-encoded three-dimensional mesh, the target three-dimensional mesh is obtained based on the to-be-encoded three-dimensional mesh, and the third bitstream is obtained based on reconstructed texture map information ~ 901

In a case that the decoder determines that the first bitstream includes reconstructed texture coordinate information, reconstruct a target three-dimensional mesh based on a first decoding result corresponding to the first bitstream, a second decoding result corresponding to the second bitstream, and a third decoding result corresponding to the third bitstream 902 ~

In a case that the decoder determines that the first bitstream does not include reconstructed texture coordinate information, generate reconstructed texture coordinate information, and reconstruct a target three-dimensional mesh based on the generated reconstructed texture coordinate information, a first decoding result corresponding to the first bitstream, a second decoding result corresponding to the second bitstream, and a third decoding result corresponding to the third bitstream ~ 903

FIG. 9

FIG. 10

```
┌─────────────────────────────────────────────┐
│  Encoding apparatus                          │  ～1100
│  ┌───────────────────────────────────────┐  │
│  │      First encoding module            │  │  ～1101
│  ├───────────────────────────────────────┤  │
│  │      First obtaining module           │  │  ～1102
│  ├───────────────────────────────────────┤  │
│  │      Second obtaining module          │  │  ～1103
│  ├───────────────────────────────────────┤  │
│  │      First generation module          │  │  ～1104
│  └───────────────────────────────────────┘  │
└─────────────────────────────────────────────┘
```

FIG. 11

```
                              ┌─1200
┌──────────────────────────────────────────────────────────┐
│                    Encoding device                        │
│  ┌───────────┐                                            │
│  │ Processor │⟺                                           │
│  └───────────┘    ┌─────────────┐      ┌───────────┐      │
│                   │             │      │  Network  │       │
│                   │Bus interface│⟺     │ interface │ ─1202 │
│  ┌───────────┐    │             │      └───────────┘      │
│  │  Memory   │⟺   └─────────────┘                         │
│  └───────────┘                                            │
└──────────────────────────────────────────────────────────┘
```

1201 Processor

1203 Memory

FIG. 12

1300

Decoding apparatus

Sixth obtaining module — 1301

Reconstruction module — 1302

FIG. 13

1400

Decoding device

1401 — Processor

Bus interface

Network interface — 1402

1403 — Memory

FIG. 14

1500

Communication device

1501 — Processor

Memory — 1502

FIG. 15

## INTERNATIONAL SEARCH REPORT

| International application No. |
| --- |
| **PCT/CN2023/096097** |

**A.   CLASSIFICATION OF SUBJECT MATTER**

G06T 9/00(2006.01)i

According to International Patent Classification (IPC) or to both national classification and IPC

**B.   FIELDS SEARCHED**

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

CNKI, CNTXT, DWPI, ENTXT, ENTXTC: 3D网格, UV坐标, 编码, 编码效率, 差异, 视频帧, 网格, 位移向量, 纹理颜色值, 纹理坐标, 细化, 细化插值, 重建, 重建纹理坐标, code, coder, coding, decoding, encoder, mesh, UV, coding efficiency, three dimensional, texture coordinate

**C.   DOCUMENTS CONSIDERED TO BE RELEVANT**

| Category* | Citation of document, with indication, where appropriate, of the relevant passages | Relevant to claim No. |
| --- | --- | --- |
| A | CN 104243958 A (LENOVO (BEIJING) CO., LTD.) 24 December 2014 (2014-12-24)<br>entire document | 1-31 |
| A | CN 101626509 A (BEIJING UNIVERSITY OF TECHNOLOGY) 13 January 2010 (2010-01-13)<br>entire document | 1-31 |
| A | KR 20060083111 A (KOREA ELECTRONICS TELECOMM et al.) 20 July 2006 (2006-07-20)<br>entire document | 1-31 |
| A | US 2018253867 A1 (CANON K. K.) 06 September 2018 (2018-09-06)<br>entire document | 1-31 |
| A | US 2021090301 A1 (APPLE INC.) 25 March 2021 (2021-03-25)<br>entire document | 1-31 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **03 July 2023** | **07 July 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/096097**

| Patent document<br>cited in search report | | | Publication date<br>(day/month/year) | Patent family member(s) | | | Publication date<br>(day/month/year) |
|---|---|---|---|---|---|---|---|
| CN | 104243958 | A | 24 December 2014 | CN | 104243958 | B | 05 October 2016 |
| CN | 101626509 | A | 13 January 2010 | CN | 101626509 | B | 02 February 2011 |
| KR | 20060083111 | A | 20 July 2006 | KR | 100668714 | B1 | 16 January 2007 |
| | | | | JP | 2008527787 | A | 24 July 2008 |
| | | | | JP | 4672735 | B2 | 20 April 2011 |
| | | | | US | 2009080516 | A1 | 26 March 2009 |
| | | | | EP | 1839265 | A1 | 03 October 2007 |
| | | | | EP | 1839265 | A4 | 17 October 2012 |
| | | | | WO | 2006075895 | A1 | 20 July 2006 |
| US | 2018253867 | A1 | 06 September 2018 | GB | 201703556 | D0 | 19 April 2017 |
| | | | | GB | 2560319 | A | 12 September 2018 |
| | | | | GB | 2560319 | B | 02 September 2020 |
| | | | | US | 10552987 | B2 | 04 February 2020 |
| US | 2021090301 | A1 | 25 March 2021 | US | 11450030 | B2 | 20 September 2022 |
| | | | | US | 2023030913 | A1 | 02 February 2023 |
| | | | | WO | 2021062044 | A1 | 01 April 2021 |

Form PCT/ISA/210 (patent family annex) (July 2022)

**REFERENCES CITED IN THE DESCRIPTION**

**Patent documents cited in the description**

• CN 202210613984